# EUROPEAN PATENT APPLICATION

(11) **EP 4 403 593 A1**
(43) Date of publication of application: **24.07.2024**
(21) Application number: 22869843.7
(22) Date of filing: 05.09.2022
(51) Int. Cl.: C08G 65/336, C09K 3/18

(54) **FLUOROPOLYETHER-GROUP-CONTAINING POLYMER, SURFACE TREATMENT AGENT, AND ARTICLE**

(30) Priority: 15.09.2021 JP 2021149903
(71) Applicant: SHIN-ETSU CHEMICAL CO., LTD., Tokyo 1000005 (JP)
(72) Inventor: SAKOH Ryusuke, Annaka-shi, Gunma 379-0224 (JP); UCHIDA Takashi, Annaka-shi, Gunma 379-0224 (JP); MOTEGI, Miki, Annaka-shi, Gunma 379-0224 (JP)
(74) Representative: Ter Meer Steinmeister & Partner
(86) International application number: PCT/JP2022/033215
(87) International publication number: WO 2023/042696

(57) **Abstract**

According to the present invention, a cured coating having exceptional water and oil repellency and abrasion resistance as well as exceptional chucking properties can be formed by using a fluoropolyether-group-containing polymer having a silanol group or a hydrolyzable silyl group represented by formula (1) 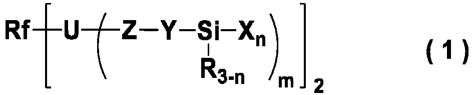 (Rf is a divalent fluoroxyalkylene-group-containing polymer residue, U is a divalent or trivalent organic group, Z is a silalkylene structure or a silarylene structure, Y is a divalent organic group, R is a C1-4 alkyl group or a phenyl group, X is a hydroxyl group or a hydrolyzable group, n is 1-3, and m is 1 or 2)
as a surface treatment agent including said polymer and/or a partial (hydrolyzed) condensate thereof.

## Description

### TECHNICAL FIELD

The present invention relates to a fluoropolyether group-containing polymer (a compound having on the molecule a divalent fluorooxyalkylene group-containing polymer residue). More particularly, the invention relates to a fluoropolyether group-containing polymer which has silanol groups or hydrolyzable silyl groups and can form a film of excellent water and oil repellency and excellent abrasion resistance, to a surface treatment agent containing this polymer and/or a partial (hydrolytic) condensation product thereof, and to an article that has been surface treated with this surface treatment agent.

### BACKGROUND ART

Because of their very low surface free energies, fluoropolyether group-containing compounds generally have, for example, water and oil repellency, chemical resistance, lubricity, releasability and anti-smudging/soiling properties. Owing to these qualities, they are widely used industrially in water and oil-repelling soil-blocking agents for paper and textiles, lubricants for magnetic recording media, oil-proofing agents for precision machines, mold release agents, cosmetics and protective films. Yet, at the same time, by their very nature, such compounds do not stick or adhere to other substrates. Even when coated onto a substrate surface, it is difficult to have the resulting film adhere to the substrate.

Silane coupling agents are familiar as substances that enable glass, fabric and other substrate surfaces to bond with organic compounds, and are widely used as coating agents for various types of substrate surfaces. Silane coupling agents have an organic functional group and a reactive silyl group (typically a hydrolyzable silyl group such as an alkoxysilyl group) on a single molecule. The hydrolyzable silyl group gives rise to self-condensation reactions under the influence of, for example, moisture in the air, forming a film. Due to the chemical/physical bonding of the hydrolyzable silyl groups with the surfaces of various substrates, this film becomes a strong film having durability.

Compositions have been disclosed which, through the use of a fluoropolyether group-containing polymer in which a hydrolyzable silyl group has been introduced onto one end of a fluoropolyether group-containing compound, readily adhere to substrate surfaces and are able to form on the substrate surface a film having water and oil repellency, chemical resistance, lubricity, releasability and anti-smudging/soiling properties (Patent Documents 1 to 4: JP-A 2012-072272, JP-A 2012-157856, JP-A 2013-136833, JP-A 2015-199906).

Cured film-containing substrates such as lenses and anti-reflective coatings that have been surface-treated with a composition containing such a fluoropolyether group-containing polymer in which a hydrolyzable silyl group has been introduced onto a fluoropolyether group-containing compound possess excellent slip properties and releasability. However, when immobilizing and machining the substrate, the slip properties have the effect of making the substrate difficult to immobilize (poor chucking characteristics). The substrate thus ends shifting during machining, as a result of which the substrate cannot be machined to the required shape.

The above substrate immobilization problem can be resolved by using a fluoropolyether group-containing polymer in which hydrolyzable silyl groups have been introduced at both ends of a fluoropolyether group-containing compound. However, a satisfactory performance in terms of the abrasion durability has not been achieved.

Prior art relating to this invention includes the above-described documents and those listed below.

### PRIOR ART DOCUMENTS

### PATENT DOCUMENTS

Patent Document 1: JP-A 2012-072272
Patent Document 2: JP-A 2012-157856
Patent Document 3: JP-A 2013-136833
Patent Document 4: JP-A 2015-199906
Patent Document 5: JP-A 2003-238577

### SUMMARY OF INVENTION

### TECHNICAL PROBLEM

In light of these circumstances, the object of the present invention is to provide a fluoropolyether group-containing polymer which has silanol groups or hydrolyzable silyl groups and can form a cured film of excellent water and oil repellency, excellent abrasion resistance and also excellent chucking characteristics, a surface treatment agent containing this polymer and/or a partial (hydrolytic) condensation product thereof, and an article that has been surface-treated with this surface treatment agent.

### SOLUTION TO PROBLEM

The inventors have conducted intensive investigations in order to achieve the above objects. As a result, they have discovered that by using a fluoropolyether group-containing polymer which has silanol groups or hydrolyzable silyl groups and is represented by subsequently described the general formula (1), a surface treatment agent containing this polymer and/or a partial (hydrolytic) condensation product thereof can form a cured film having excellent water and oil repellency, excellent abrasion resistance, and also excellent chucking characteristics. This discovery ultimately led to the present invention.

Accordingly, the invention provides the fluoropolyether group-containing polymer, surface treatment agent and article described below.
[1] A fluoropolyether group-containing polymer having silanol groups or hydrolyzable silyl groups, and having the general formula (1) below: 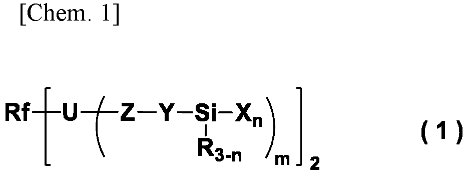 wherein
   Rf is a divalent fluorooxyalkylene group-containing polymer residue of the general formula (2) below: 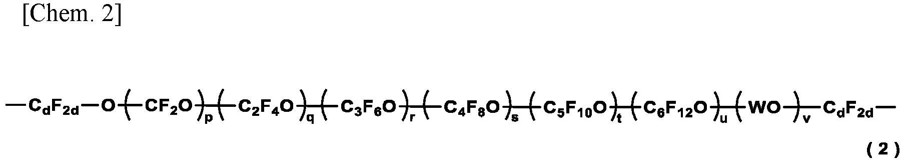
   wherein W is a fluoroalkylene group having one or more hydrogen atoms, d is independently an integer of 1 to 3 per unit, each of p, q, r, s, t, u and v is an integer of 0 to 450, p+q+r+s+t+u+v = 20 to 450, and each of these units may be linear or branched, each of recurring units shown in parentheses with p, q, r, s, t, u and v may be randomly bonded, and a number-average molecular weight of the polymer residue is 6,000 to 30,000,
   U is independently a divalent or trivalent organic group,
   Z is independently a silalkylene structure or a silarylene structure,
   Y is independently a divalent organic group,
   R is independently an alkyl group having 1 to 4 carbon atoms or a phenyl group,
   X is independently a hydroxyl group or a hydrolyzable group,
   n is independently an integer of 1 to 3 per bonding silicon atom, and
   m is 1 or 2.
[2] The fluoropolyether group-containing polymer of [1] wherein, in the formula (1), U is a divalent or trivalent aliphatic saturated hydrocarbon group having 1 to 20 carbon atoms which may include one, two or more atoms or groups selected from the group consisting of arylene group having 6 to 8 carbon atoms, oxygen atom, sulfur atom, hydroxyl group, diorganosilylene group, secondary amino group, tertiary amino group, carbonyl group, amide group, ester group, isocyanuric group and triazine ring-containing group.
[3] The fluoropolyether group-containing polymer of [1] or [2] wherein, in the formula (1), Y is an alkylene group having 1 to 20 carbon atoms which may include one, two or more atoms or groups selected from the group consisting of oxygen atom, sulfur atom and arylene group having 6 to 8 carbon atoms.
[4] The fluoropolyether group-containing polymer of any of [1] to [3] wherein, in the formula (1), X is selected from the group consisting of hydroxyl group, alkoxy group having 1 to 10 carbon atoms, alkoxyalkoxy group having 2 to 10 carbon atoms, acyloxy group having 2 to 10 carbon atoms, alkenyloxy group having 2 to 10 carbon atoms and halogen atom.
[5] The fluoropolyether group-containing polymer of any of [1] to [4], wherein the polymer of the formula (1) is represented by any of the following formulae below: 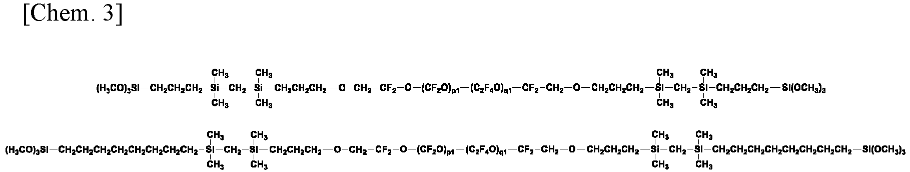 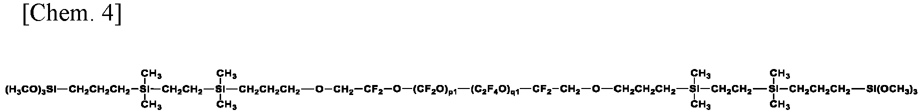 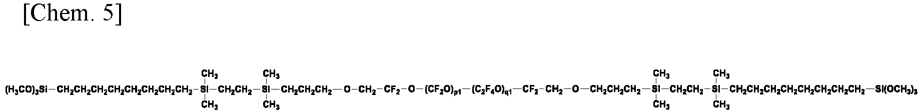 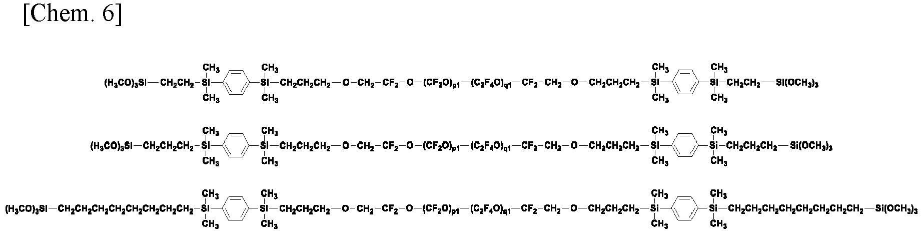 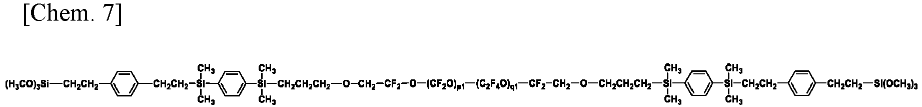 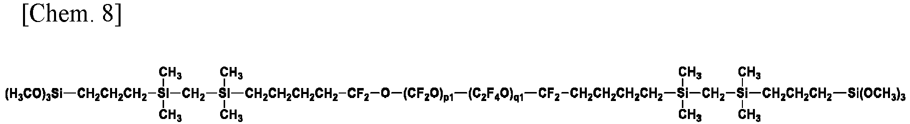 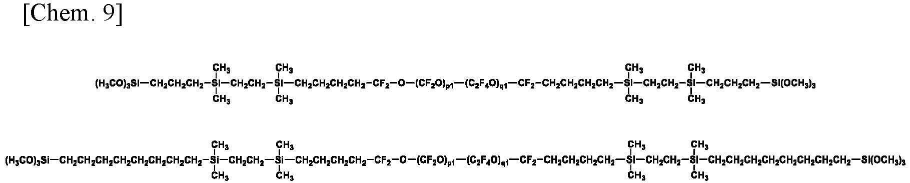 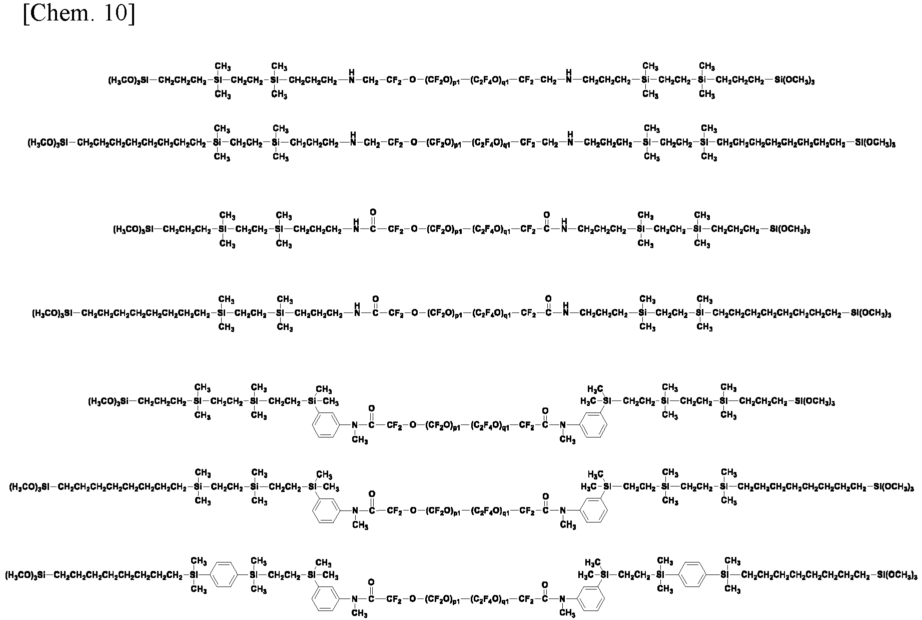 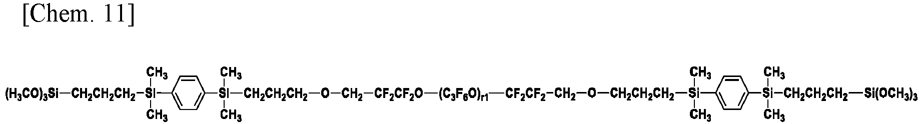 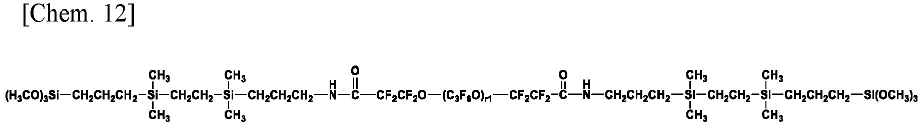 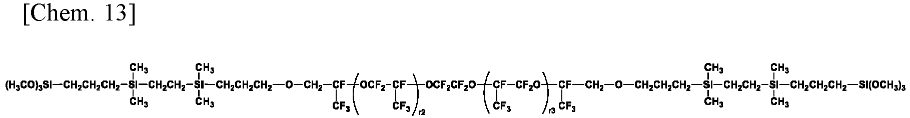 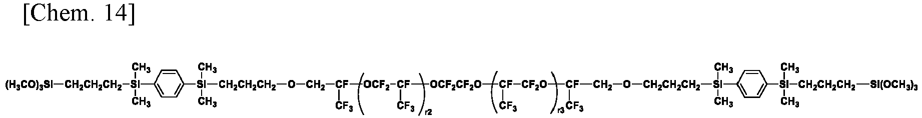 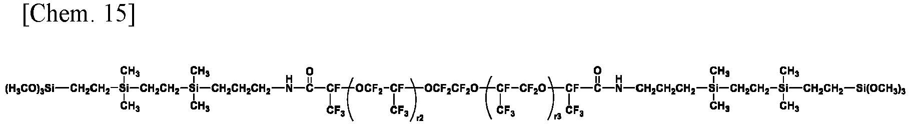 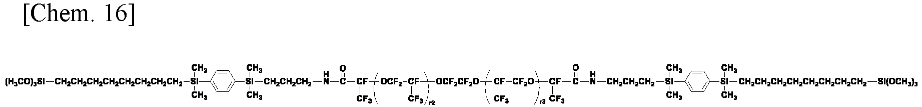 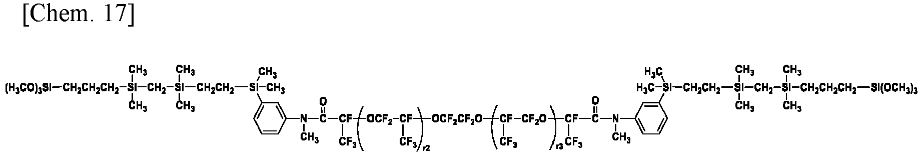 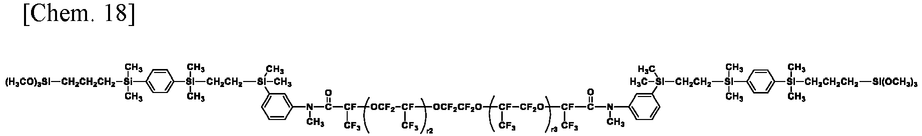 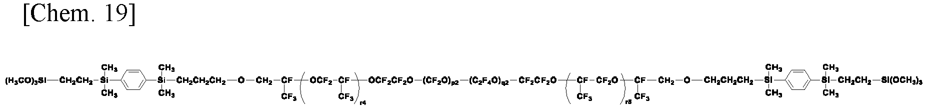 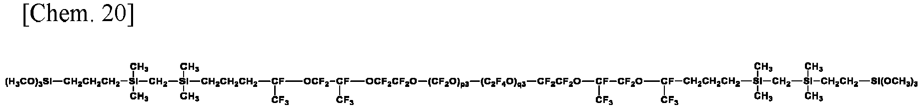 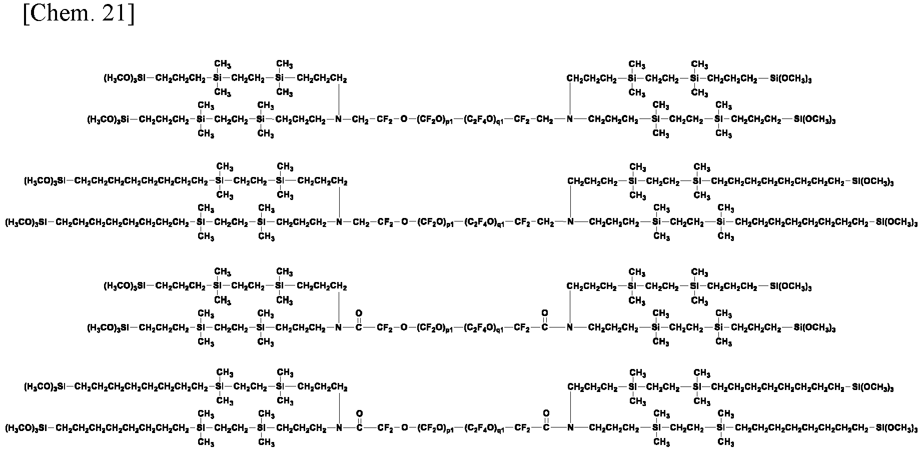 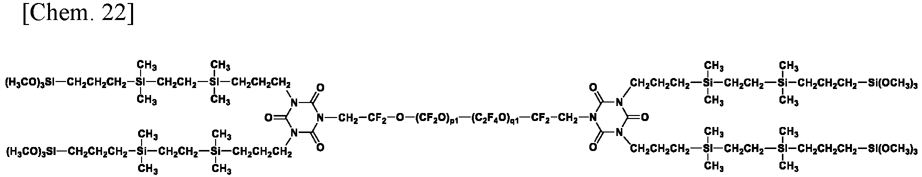 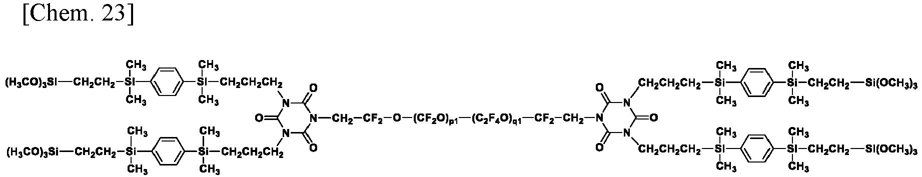 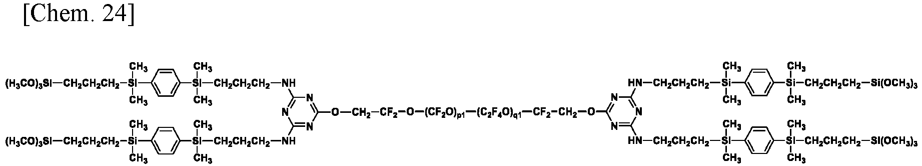 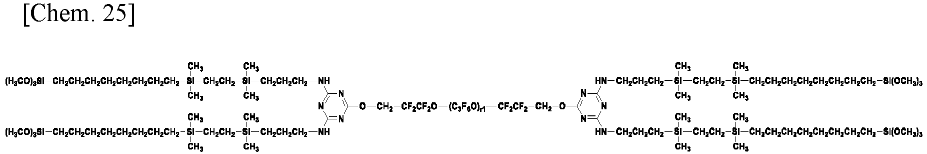 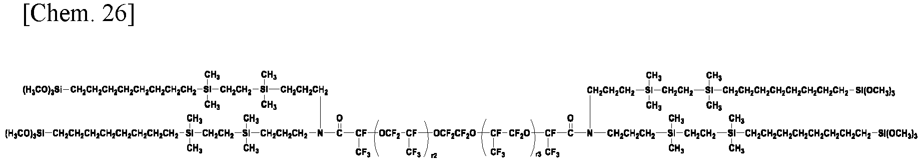 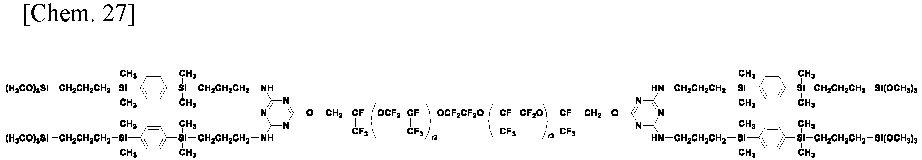 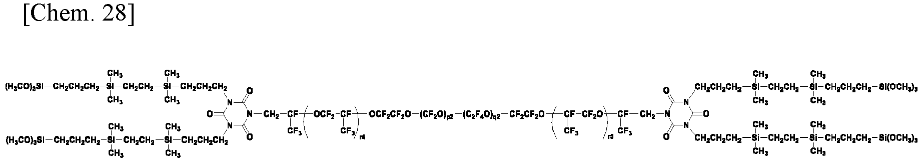 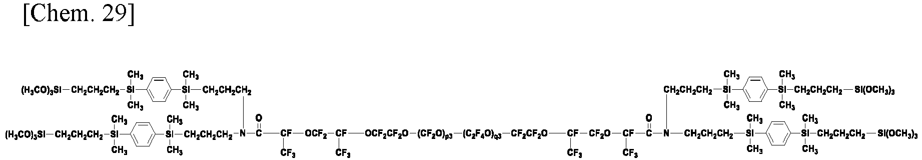 wherein p1 is an integer of 5 to 440, q1 is an integer of 5 to 250, and p1+q1 is an integer of 50 to 450; r1 is an integer of 35 to 180, r2 is an integer of 1 to 100, r3 is an integer of 1 to 100, and r2+r3 is an integer of 35 to 180; p2 is an integer of 1 to 400, q2 is an integer of 1 to 250, r4 is an integer of 1 to 100, r5 is an integer of 1 to 100, and p2+q2+r4+r5 is an integer of 40 to 403; p3 is an integer of 5 to 440, q3 is an integer of 5 to 250, and p3+q3 is an integer of 50 to 445; and the recurring units shown in parentheses with p1 and q1, p2 and q2, and p3 and q3 may be randomly bonded.
[6] A surface treatment agent composed primarily of the fluoropolyether group-containing polymer of any of [1] to [5] and/or a partial (hydrolytic) condensation product thereof.
[7] An article surface-treated with the surface treatment agent of [6]. [8]
[8]The article of [7] which is a lens substrate.

### ADVANTAGEOUS EFFECTS OF INVENTION

The fluoropolyether group-containing polymer of the invention is a high-molecular-weight polymer in which the fluorooxyalkylene group-containing polymer residue (Rf) serving as the main chain has a number-average molecular weight of 6,000 to 30,000. This polymer, by having silanol groups or hydrolyzable silyl groups at both ends of the molecular chain and moreover by having a silalkylene structure or silarylene structure within linkages between the main-chain fluorooxyalkylene group-containing polymer residue (Rf) and the silanol groups or hydrolyzable silyl groups (-SiXₙ(R)₃₋ₙ) at both ends of the molecular chain, improves substrate adhesion. As a result, articles surface-treated with a surface treatment agent containing this polymer and/or a partial (hydrolytic) condensation product thereof have excellent water and oil repellency, excellent abrasion resistance (particularly cloth abrasion resistance) and excellent substrate chucking characteristics. These advantageous effects are further apparent on lens substrates in particular.

### DESCRIPTION OF EMBODIMENTS

The fluoropolyether group-containing polymer of the invention, which is represented by the general formula (1) below, is a fluoropolyether group-containing polymer having a silalkylene structure or silarylene structure within linkages between a divalent fluorooxyalkylene group-containing polymer resin (Rf) making up the main chain and reactive functional groups (silanol groups or hydrolyzable silyl groups) at both ends of the molecular chain. In particular, it is a fluoropolyether group-containing polymer that has no siloxane bonds (Si-O-Si) on the molecule.

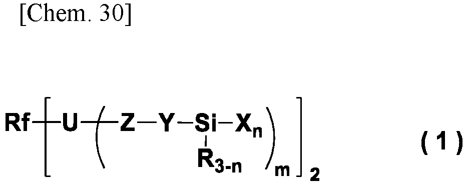

In the formula (1), Rf is a divalent fluorooxyalkylene group-containing polymer residue of the general formula (2) below: 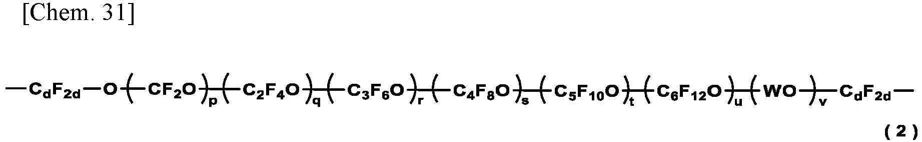
wherein W is a fluoroalkylene group having one or more hydrogen atoms, d is independently an integer of 1 to 3 per unit, each of p, q, r, s, t, u and v is an integer of 0 to 450, p+q+r+s+t+u+v = 20 to 450, and each of these units may be linear or branched, each of recurring units shown in parentheses with p, q, r, s, t, u and v may be randomly bonded, and a number-average molecular weight of the polymer residue is 6,000 to 30,000,
U is independently a divalent or trivalent organic group,
Z is independently a silalkylene structure or a silarylene structure,
Y is independently a divalent organic group,
R is independently an alkyl group having 1 to 4 carbon atoms or a phenyl group,
X is independently a hydroxyl group or a hydrolyzable group,
n is independently an integer of 1 to 3 per bonding silicon atom, and
m is 1 or 2.

In the above formula (1), Rf is a divalent fluorooxyalkylene group-containing polymer residue of the above general formula (2).

In the formula (2), W is a fluoroalkylene group having one or more hydrogen atoms. Examples include perfluoroalkylene groups such as CF₂, C₂F₄, C₃F₆, C₄F₈, C₅F₁₀ and C₆F₁₂ in which one or two fluorine atoms have been replaced with hydrogen atoms.

In the formula (2), d is independently an integer of 1 to 3 per unit, and is preferably 1 or 2.

Also, each of p, q, r, s, t, u and v is an integer of 0 to 450, with p preferably being an integer of 5 to 440, q preferably being an integer of 5 to 250, r preferably being an integer of 0 to 180, s preferably being an integer of 0 to 100, t preferably being an integer of 0 to 100, u preferably being an integer of 0 to 100 and v preferably being an integer of 0 to 100; p+q+r+s+t+u+v is 20 to 450, preferably 50 to 200, and p+q is preferably 20 to 450, especially 50 to 200. A p+q+r+s+t+u+v value smaller than the above upper limit value is desirable because the adhesion and curability are good, and a p+q+r+s+t+u+v value larger than the above lower limit value is desirable because the characteristics of the fluoropolyether group can be fully exhibited. Each of these units may be linear or branched. Each of recurring units shown in parentheses with p, q, r, s, t, u and v may be randomly bonded.

The fluorooxyalkylene group-containing polymer residue (Rf) is a high-molecular-weight polymer residue having a number-average molecular weight of 6,000 to 30,000, and preferably 6,000 to 20,000. In this invention, the number-average molecular weight (Mn) can be computed by such means as gel permeation chromatographic (GPC) analysis using a fluorocarbon solvent as the developing solvent or ¹⁹F-NMR spectroscopy.

Specific examples of Rf include those shown below. 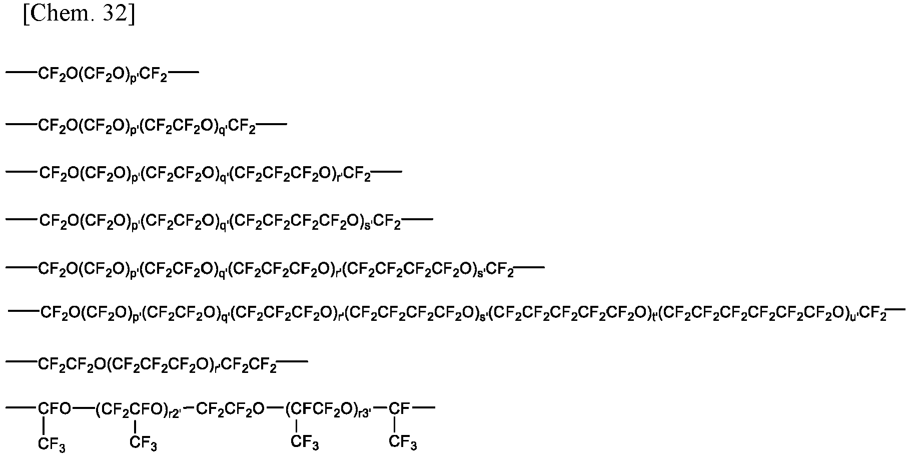 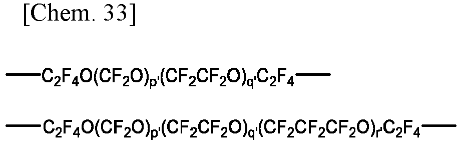 In these formulae, each of p', q', r', s', t' and u' is an integer of 1 or more, the upper limit thereof is the same as the upper limit of p, q, r, s, t and u above, and the sum of p', q', r', s', t' and u' is 20 to 450. Each of r2' and r3' is an integer of 1 or more, and the sum of r2' and r3' is 35 to 180. Each of recurring units shown in parentheses with p', q', r', s', t' and u' may be randomly bonded.

In the above formula (1), U is independently a divalent or trivalent organic group, preferably a divalent or trivalent aliphatic saturated hydrocarbon group having 1 to 20 carbon atoms. This divalent or trivalent aliphatic saturated hydrocarbon group may include one, two or more atoms or groups selected from the group consisting of arylene group having 6 to 8 carbon atoms, oxygen atom, sulfur atom, hydroxyl group, diorganosilylene group such as dimethylsilylene group, secondary amino group, tertiary amino group, carbonyl group (ketone structure), amide group, ester group, isocyanuric group and triazine ring-containing group.

Such U groups are exemplified by the following groups. Note that it is preferable that the bond on the left side is attached to Rf, and the other bonds are attached to Z. 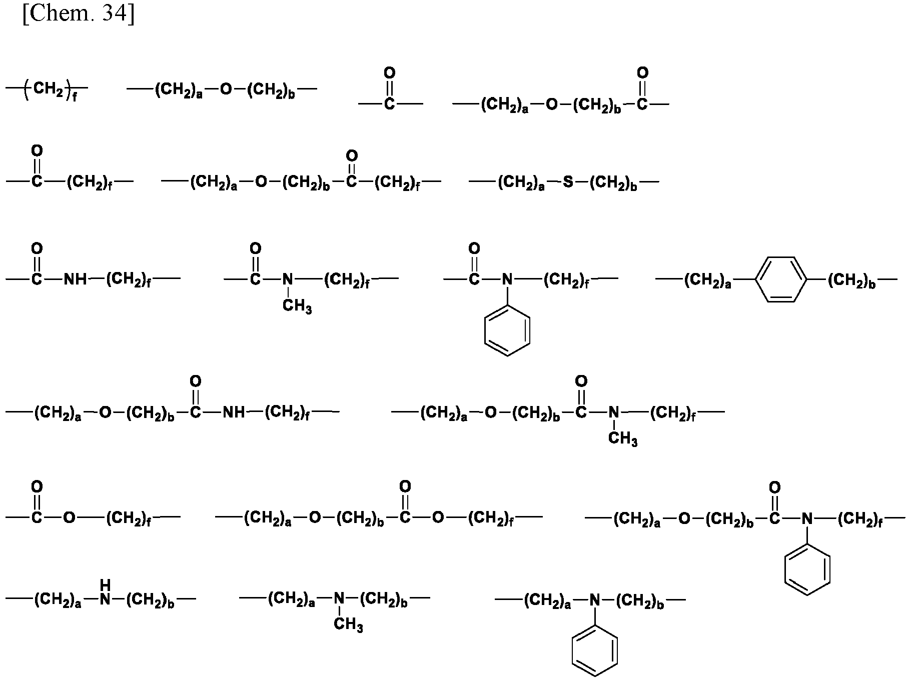 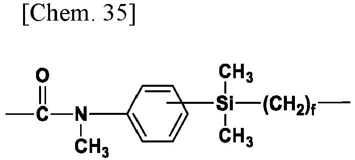 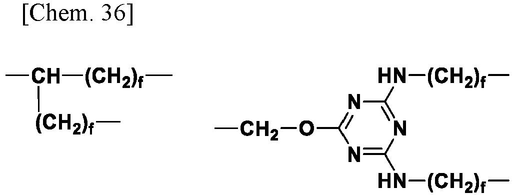 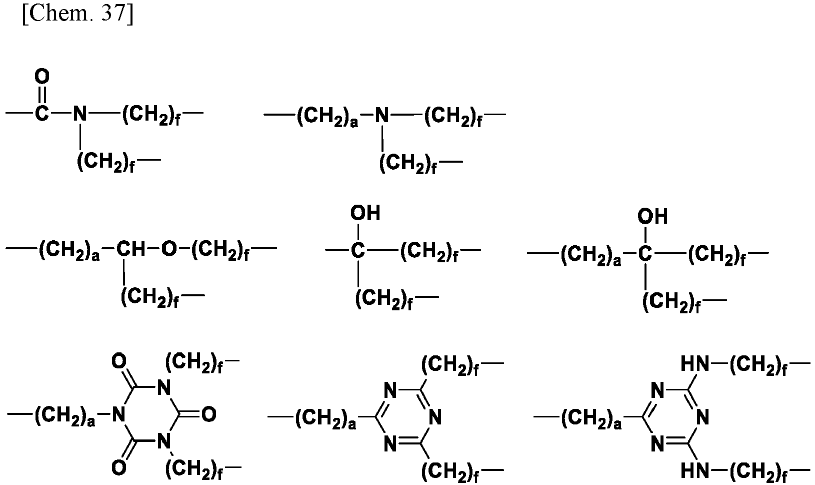 In these formulae, f is independently an integer from 2 to 4, and a, b is an integer of 1 to 4.

In the above formula (1), Z is independently a silalkylene structure or a silarylene structure, examples thereof include those shown in the following formula. 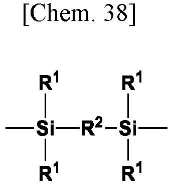 In the formula, R¹ is an alkyl group having 1 to 8, preferably 1 to 4, carbon atoms such as a methyl, ethyl, propyl or butyl group, or is a phenyl group, the R¹ groups may be the same or different. R² is an alkylene group having 1 to 6, preferably 1 to 4, carbon atoms such as a methylene, ethylene, propylene (trimethylene, methylethylene) or butylene (tetramethylene, methylpropylene) group, or is an arylene group having 6 to 8 carbon atoms such as a phenylene group.

Such Z groups are exemplified by the following groups: 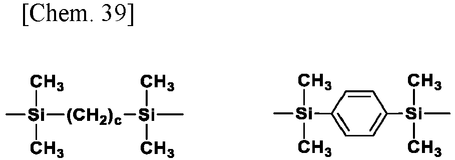 wherein c is an integer of 1 to 4.

In the formula (1), Y is independently a divalent organic group which is preferably an alkylene group having 1 to 20 carbon atoms which may include one, two or more atoms or groups selected from the group consisting of oxygen atom, sulfur atom and arylene group having 6 to 8 carbon atoms.

Such Y groups are exemplified by the following groups: 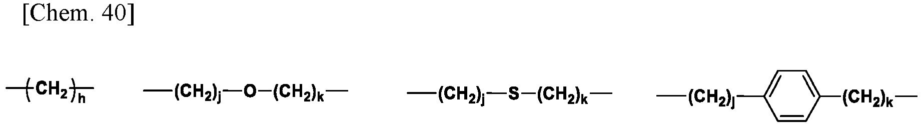 wherein h is an integer of 1 to 20, preferably an integer of 2 to 10; j, k is an integer of 1 to 10, preferably an integer of 1 to 5; and j+k is an integer of 2 to 20, preferably an integer of 2 to 10.

In the formula (1), X is independently a hydroxyl group or a hydrolyzable group, which is selected from the group consisting of hydroxyl group; alkoxy group having 1 to 10 carbon atoms such as methoxy, ethoxy, propoxy, isopropoxy, butoxy, isobutoxy, sec-butoxy and tert-butoxy groups; alkoxyalkoxy group having 2 to 10 carbon atoms such as methoxymethoxy, methoxyethoxy, ethoxymethoxy and ethoxyethoxy groups; acyloxy group having 2 to 10 carbon atoms such as acetoxy and propionoxy groups; alkenyloxy group having 2 to 10 carbon atoms such as vinyloxy, allyloxy, propenoxy and isopropenoxy groups; and halogen atom such as chlorine, bromo and iodo groups.

In the formula (1), R is independently an alkyl group having 1 to 4 carbon atoms such as methyl, ethyl, propyl or butyl group, or phenyl group. Also, n is independently an integer from 1 to 3, preferably 2 or 3 per bonding silicon atom, and m is 1 or 2.

The method for preparing the fluoropolyether group-containing polymer of the formula (1) having silanol groups or hydrolyzable silyl groups is exemplified by the methods described below.

A fluoropolyether group-containing polymer having olefin sites (alkenyl groups) at both ends of the molecular chain is dissolved in a solvent, e.g., a fluorocarbon solvent such as 1,3-bis(trifluoromethyl)benzene, the solution is mixed with an organosilicon compound having, e.g., a silalkylene structure or a silarylene structure on the molecule and having a SiH group and a silanol group or a hydrolyzable silyl group (e.g., a halogenated silyl group or an alkoxysilyl group), and the resulting mixture is aged for 1 to 72 hours, preferably 20 to 36 hours, and more preferably about 24 hours, at a temperature of between 40 and 120°C, preferably between 60 and 100°C, and more preferably about 80°C, in the presence of a toluene solution of a hydrosilylation catalyst such as a chloroplatinic acid/vinyl siloxane complex. In the organosilicon compound having on the molecule a silalkylene structure or a silarylene structure and having a SiH group and a silanol group or a hydrolyzable silyl group, when an organosilicon compound having a halogenated silyl group as the hydrolyzable silyl group is used, the substituent (halogen atom) on the silyl group may be replaced with, as another hydrolyzable group, an alkoxy group such as a methoxy group.

Here, in the preparation of the fluoropolyether group-containing polymer of the formula (1) having silanol groups or hydrolyzable silyl groups, the fluoropolyether group-containing polymer having olefin sites (alkenyl groups) at both ends of the molecular chain is exemplified by fluoropolyether group-containing polymers of the general formula (3) below: 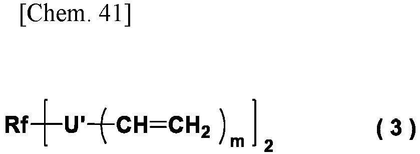 wherein Rf and m are the same as above, and U' is independently a single bond or a divalent or trivalent organic group.

In the above formula (3), U' is independently a single bond or a divalent or trivalent organic group, the divalent or trivalent organic group is preferably a divalent or trivalent hydrocarbon group having 1 to 18 carbon atoms which may include one, two or more atoms or groups selected from the group consisting of arylene group having 6 to 8 carbon atoms, oxygen atom, sulfur atom, hydroxyl group, diorganosilylene group such as dimethylsilylene group, secondary amino group, tertiary amino group, carbonyl group, amide group, ester group, isocyanuric group and triazine ring-containing group.

Preferable examples of U' include those shown below. Note that it is preferable that the bond on the left side is attached to Rf, and the other bonds are attached to an alkenyl group. 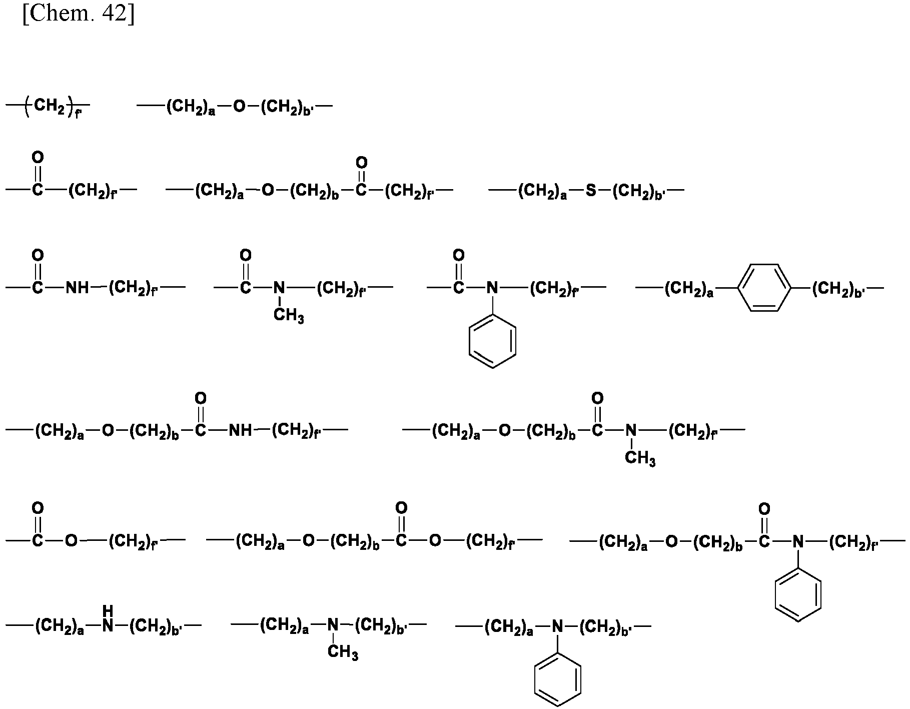 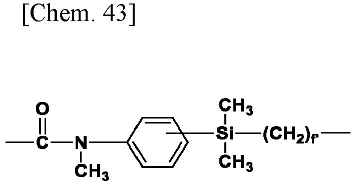 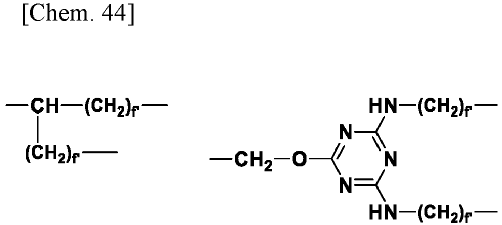 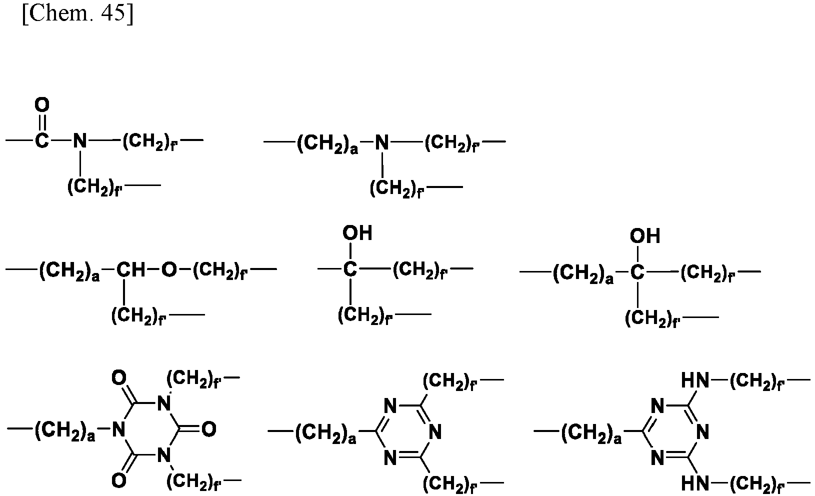 In these formulae, f' is an integer of 0 to 2, a, b is an integer of 1 to 4, and b' is an integer of 0 to 2.

The fluoropolyether group-containing polymer of the formula (3) having olefin sites (alkenyl groups) at both ends of the molecular chain is exemplified by the following compounds. 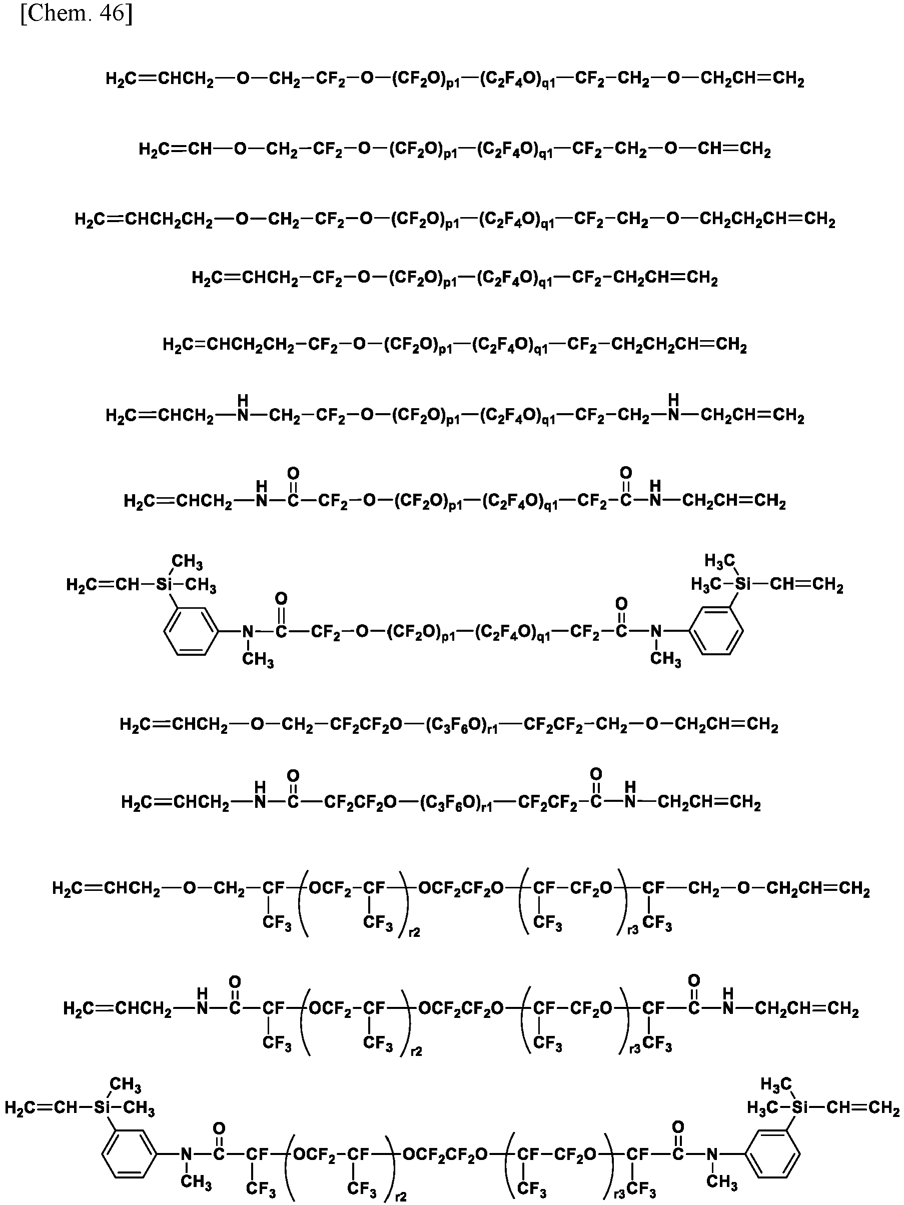 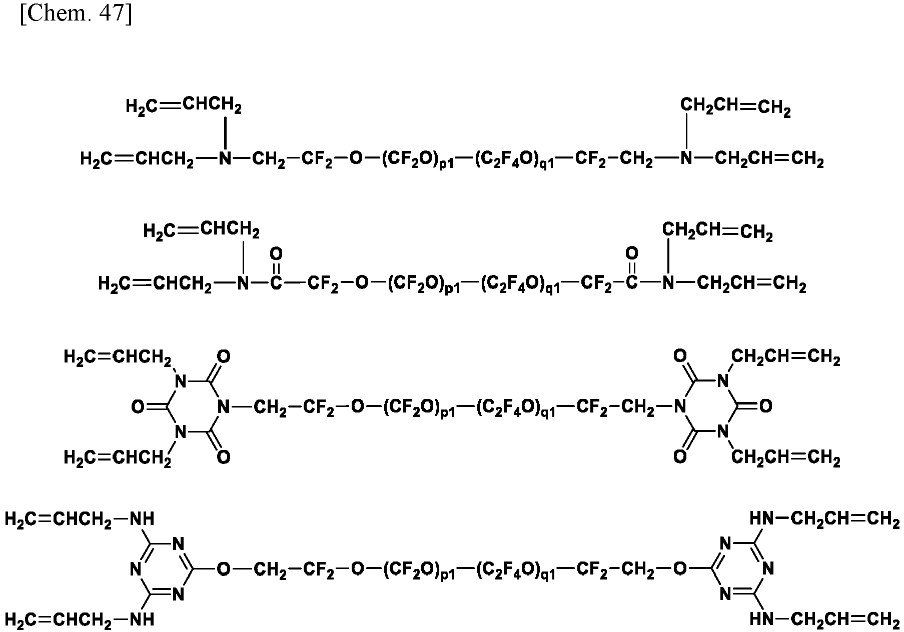 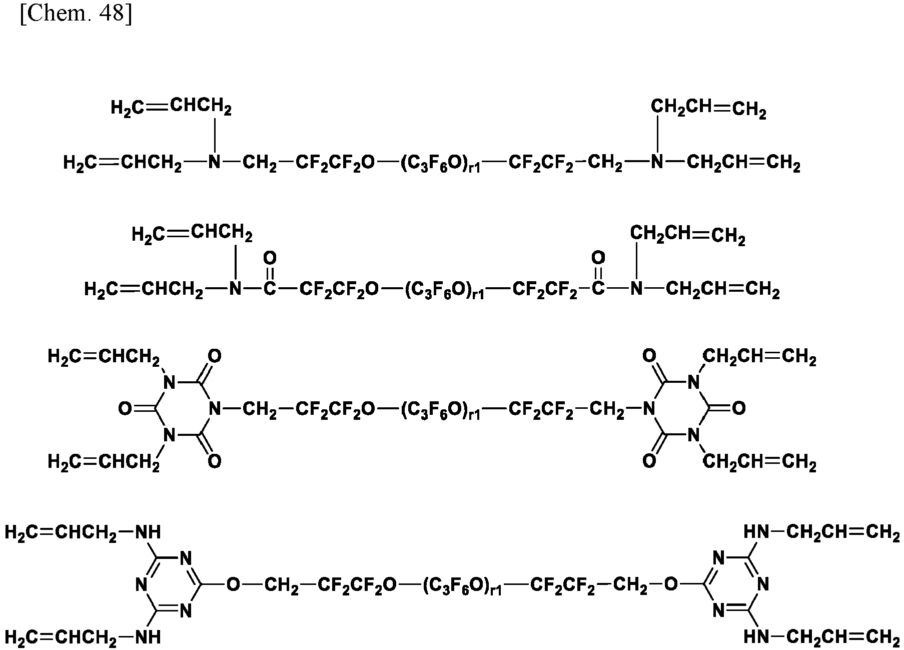 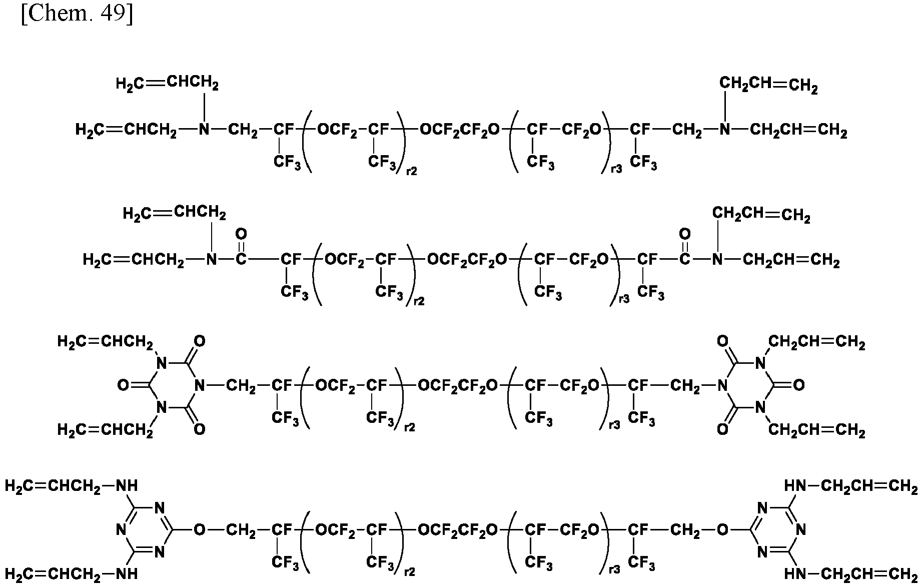 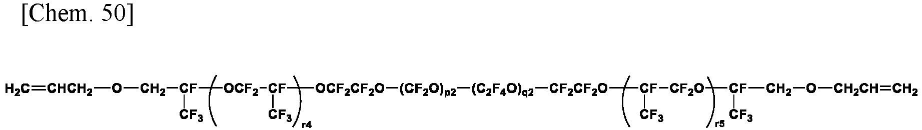 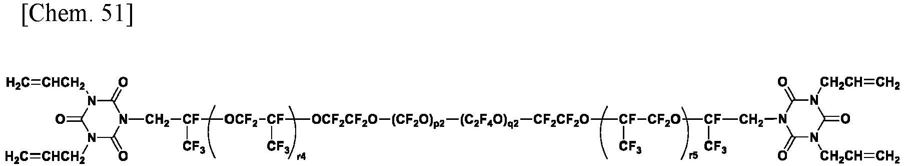 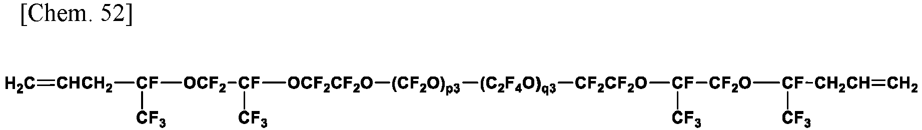 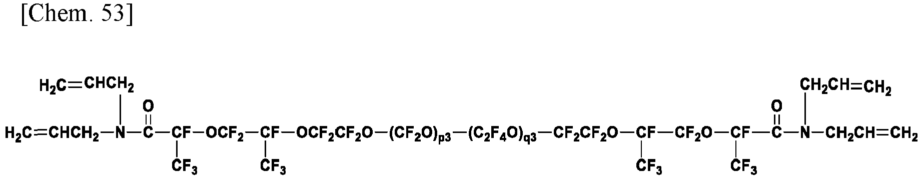 In these formulae, p1 is an integer of 5 to 440, q1 is an integer of 5 to 250, and p1+q1 is an integer of 50 to 450; r1 is an integer of 35 to 180, r2 is an integer of 1 to 100, r3 is an integer of 1 to 100, and r2+r3 is an integer of 35 to 180; p2 is an integer of 1 to 400, q2 is an integer of 1 to 250, r4 is an integer of 1 to 100, r5 is an integer of 1 to 100, and p2+q2+r4+r5 is an integer of 40 to 403; and p3 is an integer of 5 to 440, q3 is an integer of 5 to 250, and p3+q3 is an integer of 50 to 445. The recurring units shown in parentheses with p1 and q1, p2 and q2, and p3 and q3 may be randomly bonded.

In preparing the fluoropolyether group-containing polymer of formula (1) having silanol groups or hydrolyzable silyl groups, the organosilicon compound having on the molecule a silalkylene structure or silarylene structure and having a SiH group and a silanol group or a hydrolyzable silyl group is preferably a compound of general formula (4) below. 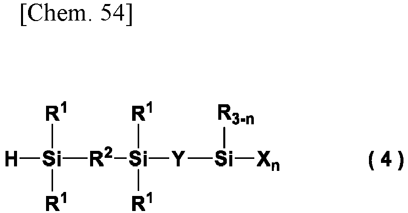 In this formula, R¹, R², Y, R, X and n are the same as above.

Examples of such organosilicon compounds having on the molecule a silalkylene structure or silarylene structure and having a SiH group and a silanol group or a hydrolyzable silyl group include the following.

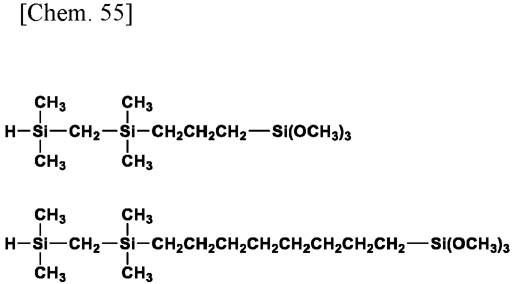

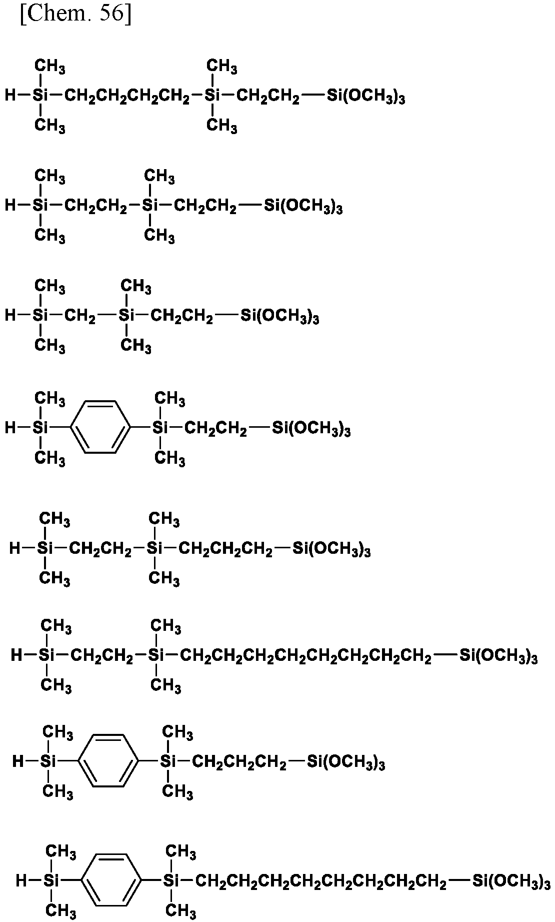

In the preparation of the fluoropolyether group-containing polymer of the formula (1) having silanol groups or hydrolyzable silyl groups, when reacting a fluoropolyether group-containing polymer having olefin sites (alkenyl groups) at both ends of the molecular chain with an organosilicon compound having on the molecule a silalkylene structure or silarylene structure and having a SiH group and a silanol group or a hydrolyzable silyl group, an amount of the organosilicon compound used may be set such that the amount of SiH groups on the organosilicon compound per equivalent of the olefin sites (alkenyl groups) on the fluoropolyether group-containing polymer is preferably from 1 to 4 equivalents, more preferably from 1 to 2.5 equivalents, and even more preferably about 1.5 equivalents.

In the organosilicon compound having on the molecule a silalkylene structure or silarylene structure and having a SiH group and a silanol group or a hydrolyzable silyl group, when using an organosilicon compound having a halogenated silyl group as the hydrolyzable silyl group, the substituent (halogen atom) on the silyl group may be subsequently replaced with another hydrolyzable group, e.g., an alkoxy group such as a methoxy group. Examples of reagents that may be used when replacing the substituent (halogen atom) on this silyl group with another hydrolyzable group include alcohols having from 1 to 10 carbon atoms, such as methanol, ethanol, propanol, isopropanol and butanol.

An amount of this use may be set to preferably from 10 to 200 parts by weight, more preferably from 40 to 100 parts by weight, and even more preferably 65 parts by weight, per 100 parts by weight of the product of the addition reaction between the fluoropolyether group-containing polymer having olefin sites (alkenyl groups) at both ends of the molecular chain and the organosilicon compound having on the molecule a silalkylene structure or silarylene structure and having a SiH group and a hydrolyzable silyl group.

A solvent used in preparing the fluoropolyether group-containing polymer of the formula (1) having silanol groups or hydrolyzable silyl groups may be, e.g., a fluorocarbon solvent. Examples of suitable fluorocarbon solvents include hydrofluoroether (HFE) solvents (manufactured by 3M Co., product name: Novec series) such as 1,3-bis(trifluoromethyl)benzene, trifluoromethylbenzene, methyl nonafluorobutyl ether, methyl nonafluoroisobutyl ether, ethyl nonafluorobutyl ether, ethyl nonafluoroisobutyl ether and 1,1,1,2,3,4,4,5,5,5-decafluoro-3-methoxy-2-(trifluoromethyl)pentane, and perfluorocarbon solvents composed of completely fluorinated compounds (manufactured by 3M Co., product name: Fluorinert series).

An amount of the solvent used per 100 parts by weight of the fluoropolyether group-containing polymer having olefin sites (alkenyl groups) at both ends of the molecular chain is from 10 to 300 parts by weight, preferably from 50 to 150 parts by weight, and more preferably about 100 parts by weight.

A hydrosilylation catalyst used in preparing the fluoropolyether group-containing polymer of the formula (1) having silanol groups or hydrolyzable silyl groups may be a platinum group metal catalyst, examples of which include platinum black, chloroplatinic acid, alcohol-modified chloroplatinic acids, complexes of chloroplatinic acid with olefins, aldehydes, vinyl siloxanes, acetylene alcohols or the like, tetrakis(triphenylphosphine)palladium and chlorotris(triphenylphosphine)rhodium. Platinum compounds such as vinyl siloxane coordination compounds are preferred.

An amount of the hydrosilylation catalyst used with respect to the weight of the fluoropolyether group-containing polymer having olefin sites (alkenyl groups) at both ends of the molecular chain, expressed in terms of the weight of the transition metal, may be set to from 0.01 to 100 ppm, and preferably from 0.1 to 50 ppm.

The fluoropolyether group-containing polymer of the formula (1) having silanol groups or hydrolyzable silyl groups has a structure that is exemplified by the structures shown below. Fluoropolyether group-containing polymers having several types of hydrolyzable silyl groups can be obtained by changing the combination of Rf, U, Z, Y, X, R, n and m in the formula (1). In the following formulae, p1 is an integer of 5 to 440, q1 is an integer of 5 to 250, p1+q1 is an integer of 50 to 450, r1 is an integer of 35 to 180, r2 is an integer of 1 to 100, r3 is an integer of 1 to 100, r2+r3 is an integer of 35 to 180, p2 is an integer of 1 to 400, q2 is an integer of 1 to 250, r4 is an integer of 1 to 100, r5 is an integer of 1 to 100, and p2+q2+r4+r5 is an integer of 40 to 403. Also, p3 is an integer of 5 to 440, q3 is an integer of 5 to 250, and p3+q3 is an integer of 50 to 445. The recurring units shown in parentheses with p1 and q1, p2 and q2, and p3 and q3 may be randomly bonded.

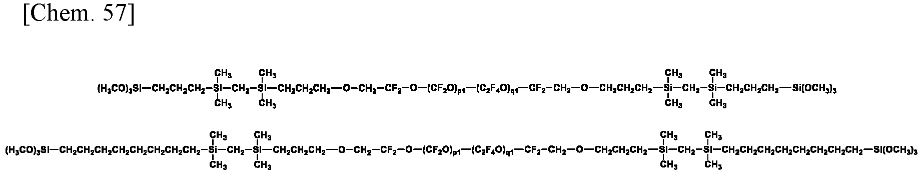

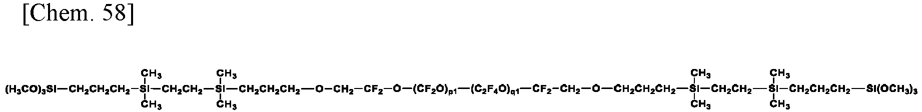

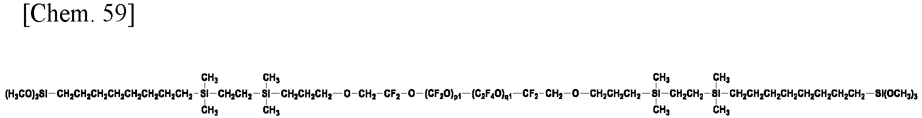

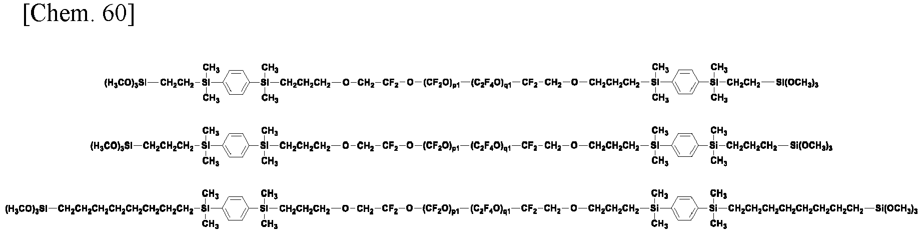

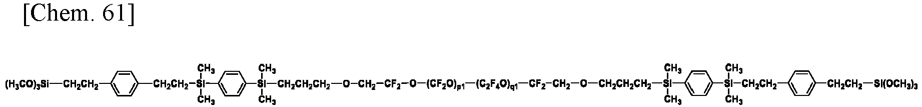

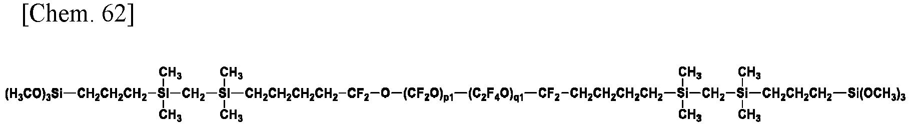

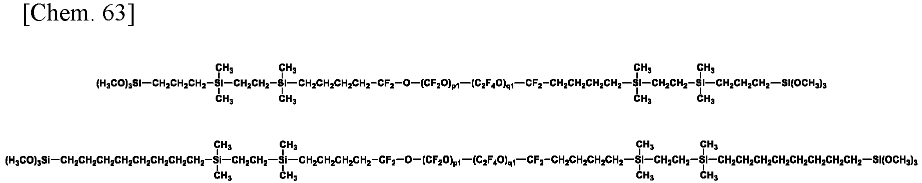

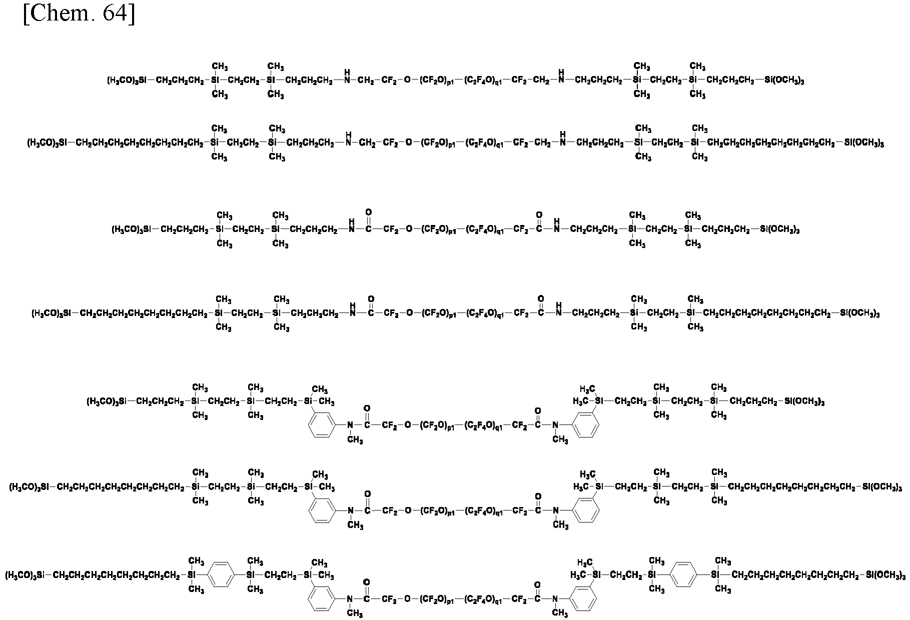

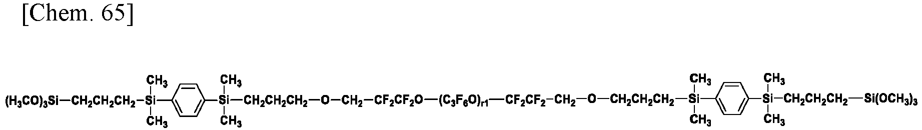

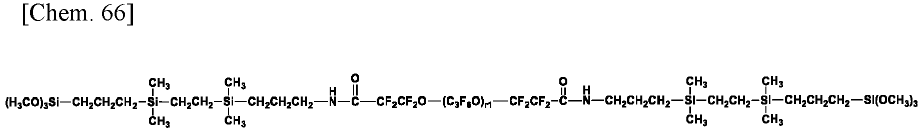

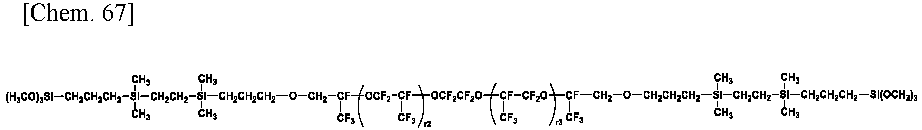

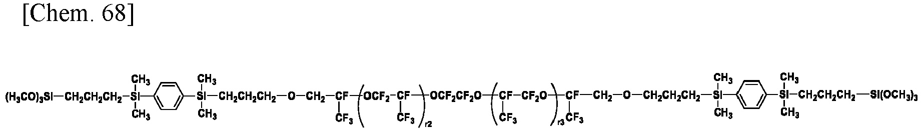

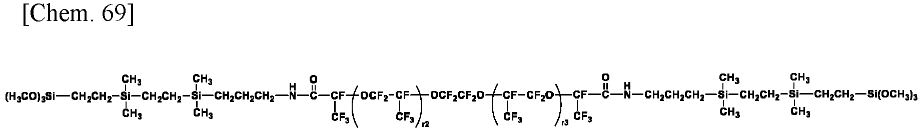

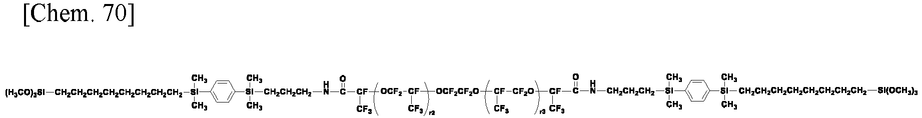

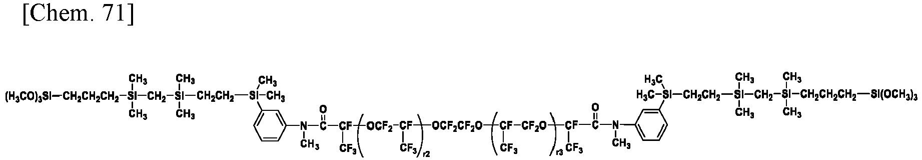

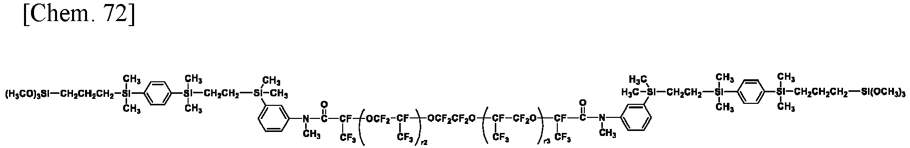

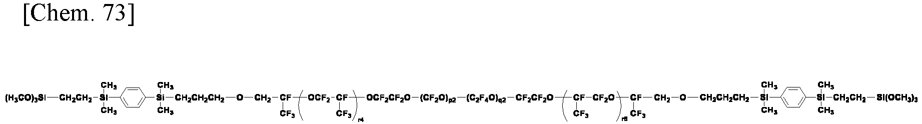

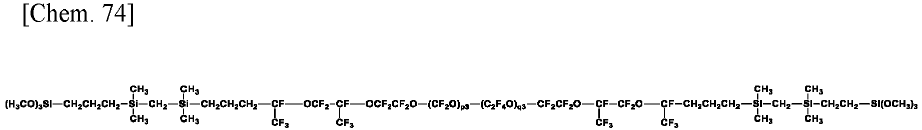

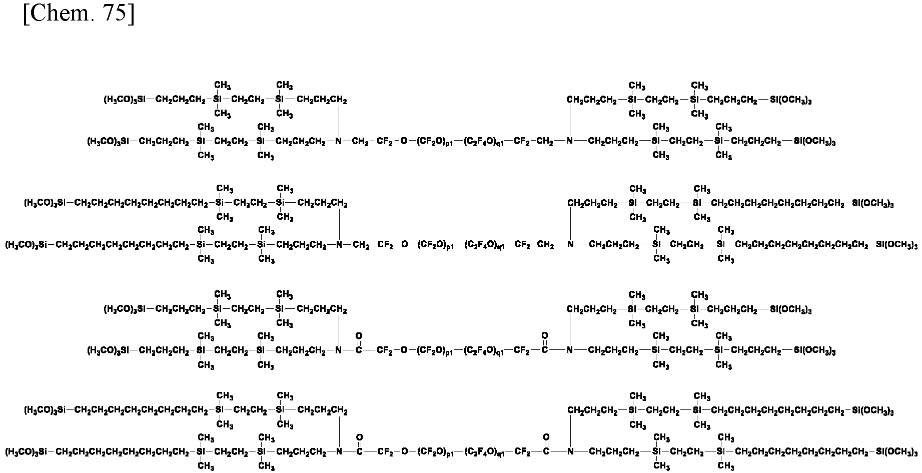

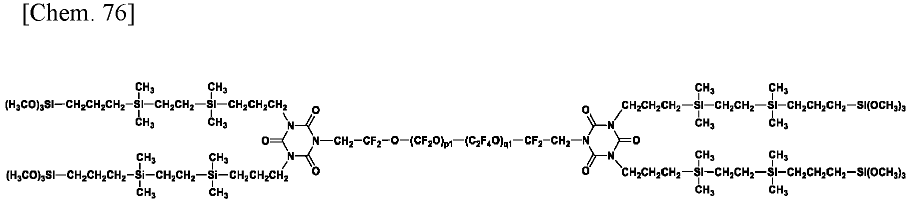

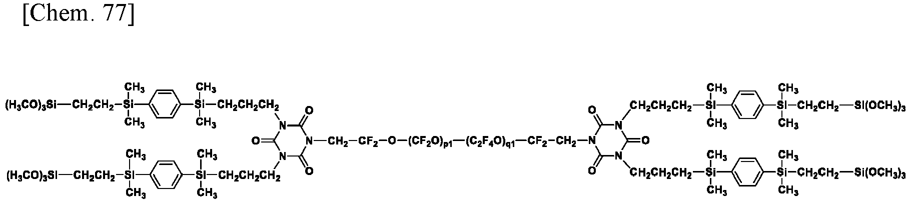

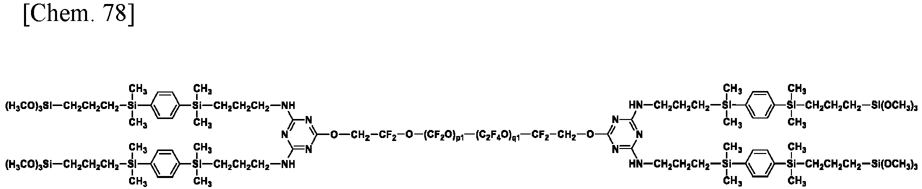

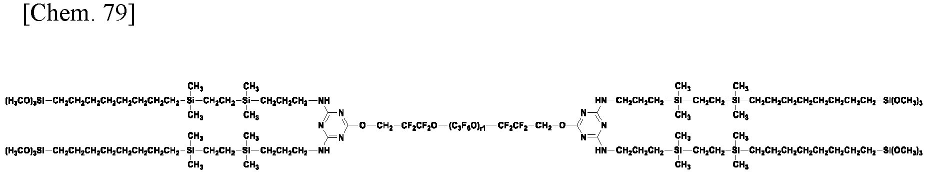

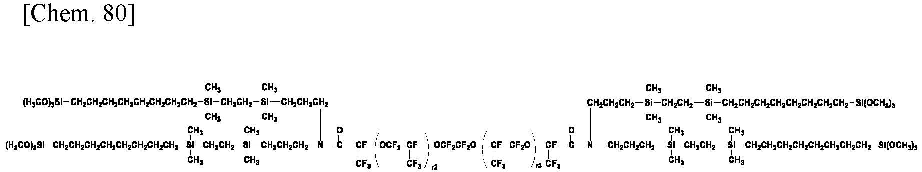

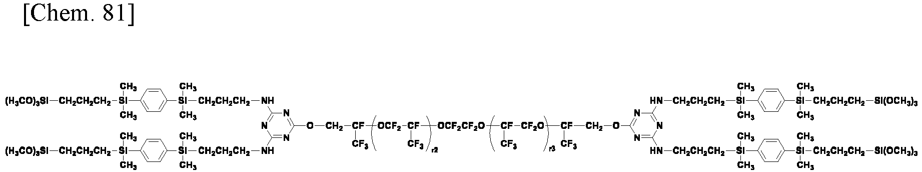

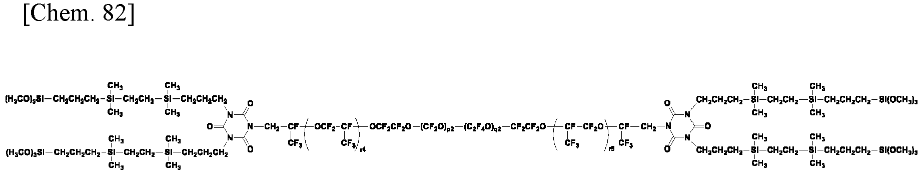

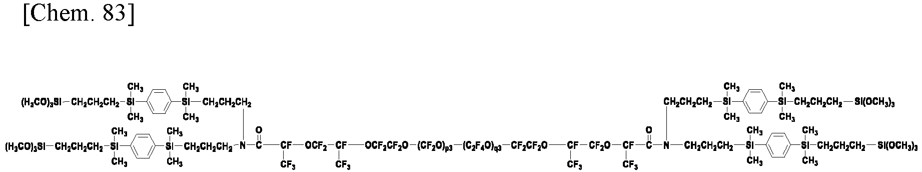

For example, when using the compound of the following formula: 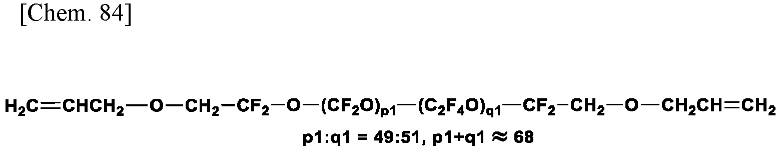 as the fluoropolyether group-containing polymer having olefin sites (alkenyl groups) at both ends of the molecular chain and using the silane compound of the following formula: 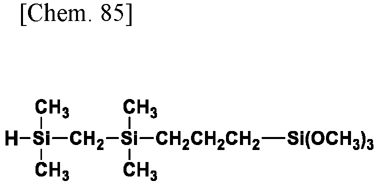 as the organosilicon compound having on the molecule a silalkylene structure or silarylene structure and having a SiH group and a silanol group or a hydrolyzable silyl group, a compound of the following formula can be obtained.

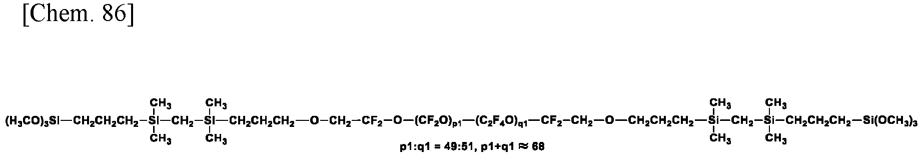

The present invention further provides a surface treatment agent containing as the primary ingredient a fluoropolyether group-containing polymer of the general formula (1) having silanol groups or hydrolyzable silyl groups and/or a partial (hydrolytic) condensation product thereof. It suffices for the surface treatment agent to include the above-described fluoropolyether group-containing polymer having silanol groups or hydrolyzable silyl groups and/or a partial (hydrolytic) condensation product thereof as the primary ingredient, although the surface treatment agent may include unreacted starting materials prior to introduction of the terminal silanol groups or terminal hydrolyzable silyl groups on the fluoropolyether group-containing polymer having silanol groups or hydrolyzable silyl groups, and reaction intermediates. As used herein, "partial (hydrolytic) condensation product" refers to the product obtained by partially condensing hydroxyl groups on the fluoropolyether group-containing polymer of the general formula (1), or hydroxyl groups resulting from partial hydrolysis beforehand by a known method of terminal hydrolyzable silyl groups on the fluoropolyether group-containing polymer of the general formula (1).

Also, "containing as the primary ingredient (composed primarily of)" signifies a content of the fluoropolyether group-containing polymer of the general formula (1) having silanol groups or hydrolyzable silyl groups and/or a partial (hydrolytic) condensation product thereof within the total amount of the surface treatment agent, exclusive of the subsequently described solvent, that is from 50 to 100 wt%, preferably from 60 to 100 wt%, and more preferably from 80 to 100 wt%.

If necessary, the surface treatment agent may additionally include, aside from the fluoropolyether group-containing polymer of the general formula (1) having silanol groups or hydrolyzable silyl groups serving as the primary ingredient, a fluorine-containing compound of the formula (5) below (non-functional fluoropolyether polymer):

A-Rf-A (5)

wherein Rf is the same as above, A is independently a fluorine atom, a hydrogen atom or a monovalent fluorine-containing group having a terminal -CF₃ group, -CF₂H group or -CH₂F group.

In the formula (5), Rf is exemplified by the same residues as mentioned earlier in connection with the above formula (1). These Rf residues may be the same as or different from the Rf residue in the formula (1).

In the formula (5), A is independently a fluorine atom, a hydrogen atom or a monovalent fluorine-containing group having a terminal -CF₃ group, -CF₂H group or -CH₂F group. Specific examples of monovalent fluorine-containing groups having a terminal -CF₃ group, -CF₂H group or -CH₂F group include -CF₃, -CF₂CF₃, -CF₂CF₂CF₃, -CH₂CF(CF₃)-OC₃F₇ and - CH₂OCF₂CFH-OC₃F₇ groups. Of these, A is preferably a fluorine atom, a -CF₃ group or a - CF₂CF₃ group.

Exemplary fluorine-containing compounds of the formula (5) (non-functional fluoropolyether polymers) include compounds of the following formulas. 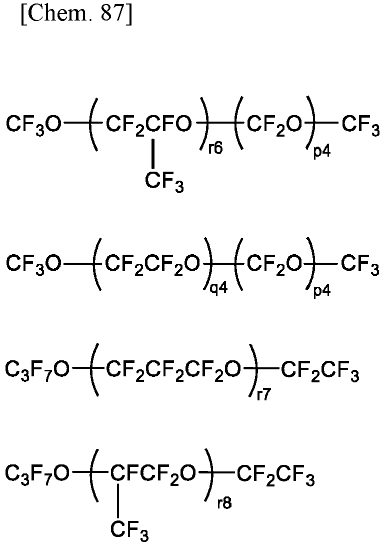 In these formulae, p4, q4 and r6 are each independently an integer of 0 to 450, the sum of p4, q4 and r6 is from 20 to 450, and r7 and r8 are each an integer of 20 to 450. The recurring units shown in parentheses with p4, q4 and r6 may be randomly bonded.

A content of the fluorine-containing compound of the formula (5) (non-functional fluoropolyether polymer) is from 0 to 100 parts by weight, preferably from 0 to 60 parts by weight, and more preferably from 0 to about 30 parts by weight, per 100 parts by weight of the fluoropolyether group-containing polymer of the general formula (1) having silanol groups or hydrolyzable silyl groups and/or a partial (hydrolytic) condensation product thereof serving as the primary ingredient.

A hydrolytic condensation catalyst, such as an organotin compound (e.g., dibutyltin dimethoxide, dibutyltin dilaurate), organotitanium compound (e.g., tetra-n-butyl titanate), organic acid (e.g., acetic acid, methanesulfonic acid, fluorine-modified carboxylic acids), or inorganic acid (e.g., hydrochloric acid, sulfuric acid) may be optionally added to the surface treatment agent. Of these, acetic acid, tetra-n-butyl titanate, dibutyltin dilaurate and fluorine-modified carboxylic acids are preferred.

The hydrolytic condensation catalyst is added in a catalytic amount, which is typically from 0.01 to 5 parts by weight, and especially from 0.1 to 1 part by weight, per 100 parts by weight of the fluoropolyether group-containing polymer having silanol groups or hydrolyzable silyl groups and/or a partial (hydrolytic) condensation product thereof.

The surface treatment agent may include a suitable solvent. Examples of such solvents include fluorine-modified aliphatic hydrocarbon solvents (e.g., perfluorohexane, perfluoroheptane, perfluorooctane, tridecafluorooctane), fluorine-modified aromatic hydrocarbon solvents (e.g., 1,3-bis(trifluoromethyl)benzene), fluorine-modified ether solvents (e.g., methyl perfluorobutyl ether, ethyl perfluorobutyl ether, perfluoro(2-butyltetrahydrofuran) and methyl perfluoroheptenyl ether), fluorine-modified alkylamine solvents (e.g., perfluorotributylamine, perfluorotripentylamine), hydrocarbon solvents (e.g., petroleum benzine, toluene, xylene), and ketone solvents (e.g., acetone, methyl ethyl ketone, methyl isobutyl ketone). Of these, from the standpoint of solubility and wettability, fluorine-modified solvents are desirable. 1,3-Bis(trifluoromethyl)benzene, perfluoro(2-butyltetrahydrofuran), perfluorotributylamine, ethyl perfluorobutyl ether, ethyl perfluorobutyl ether and tridecafluorooctane are especially preferred.

Two or more of the above solvents may be mixed together. It is preferable for the solvent to uniformly dissolve the fluoropolyether group-containing polymer having silanol groups or hydrolyzable silyl groups, partial (hydrolytic) condensation product thereof and the non-functional fluoropolyether polymer. An optimal concentration of the sum of the fluoropolyether group-containing polymer having silanol groups or hydrolytic silyl groups, partial (hydrolytic) condensation product thereof and the non-functional fluoropolyether polymer which are to be dissolved in the solvent differs according to the processing method, and but should be an amount that is easy to weigh out. In case where the surface treatment agent is to be directly applied, an amount is preferably from 0.01 to 10 parts by weight, especially from 0.05 to 5 parts by weight, per 100 parts by weight of the sum of the solvent, the fluoropolyether group-containing polymer having silanol groups or hydrolyzable silyl groups, partial (hydrolytic) condensation product thereof and the non-functional fluoropolyether polymer. In case where vapor deposition treatment is to be carried out, an amount is preferably from 1 to 100 parts by weight, especially from 3 to 30 parts by weight, per 100 parts by weight of the sum of the solvent, the fluoropolyether group-containing polymer having silanol groups or hydrolyzable silyl groups, partial (hydrolytic) condensation product thereof and the non-functional fluoropolyether polymer.

The surface treatment agent of the invention can be applied to a substrate by a known method, such as brush coating, dipping, spraying and vapor deposition treatment. The heating method used in the case of vapor deposition treatment may be a resistance heating method or an electron beam heating method, and is not particularly limited. The curing temperature varies according to the curing method. For example, in the case of direct application (brush coating, dipping, spraying or the like), it is preferable to set a temperature to between 25 and 200°C, especially between 25 and 150°C, for a period of from 30 minutes to 36 hours, especially from 1 to 18 hours. In the case where vapor deposition treatment is to be carried out, a temperature within the range of 20 to 200°C is desirable. Alternatively, the surface treatment agent may be cured under humidification. A thickness of the cured film is suitably selected according to the type of substrate, but is typically 0.1 to 100 nm, especially from 1 to 20 nm. The film thickness can be measured by such techniques as spectral reflectance measurement, x-ray reflectance measurement, spectral ellipsometry and x-ray fluorescence measurement. Also, in spray coating, for example, when the surface treatment agent is diluted in a fluorocarbon solvent to which water has been added in advance and spray-coated after being hydrolyzed, i.e., producing Si-OH, the curing after coating will be fast.

A substrate treated with the surface treatment agent of the invention is not particularly limited, and may be made of various materials, such as paper, cloth, metals and oxides thereof, glass, plastic, ceramic or quartz. The surface treatment agent of the invention can impart water and oil repellency to the substrate. Use as the surface treatment agent for SiO₂-treated glass and film is especially suitable.

Articles that may be treated with the surface treatment agent of the invention include, for example, optical articles such as car navigation systems, mobile phones, smart phones, digital cameras, digital video cameras, personal digital assistants, portable audio players, car audio systems, gaming devices, eyeglass lenses, camera lenses, lens filters, sunglasses, medical devices such as gastroscopes, copiers, personal computers, liquid-crystal displays, organic EL displays, plasma displays, touchscreen displays, protective films and anti-reflective films. Because the surface treatment agent of the invention can prevent fingerprints and finger oils from adhering to these articles, and moreover can impart scratch resistance, it is especially useful as a water and oil repelling layer on lenses, touchscreen displays, anti-reflective films and the like.

The surface treatment agent of the invention is useful also as an anti-stain coating for sanitary fixtures such as bathtubs and sinks, anti-smudge coatings for window glass or reinforced glass in cars, trains and airplanes, headlight covers and the like, water and oil-repelling coatings for construction materials used in exterior walls, grease stain-preventing coatings for construction materials used in kitchens, coatings to prevent smudging, the affixing of posters and graffiti on phone booths, coatings to prevent fingerprints from being left on art objects and the like, coatings to keep fingerprints off of compact disks, DVDs, etc., release agents for molds, and paint additives, resin modifiers, inorganic filler flowability modifiers or dispersibility modifiers, and lubricity enhancers for tapes and films.

In particular, the surface treatment agent of the invention can impart to a lens substrate a cured film of excellent water and oil repellency, excellent abrasion resistance, and excellent chucking characteristics.

As used herein, "chucking characteristics" refers to the degree to which a substrate is kept immobile when machined in an adhesive tape-secured state. For example, when a lens is held in place with lens blocking tape for lens edging, the chucking characteristics are assessed based generally on the strength of adhesion between the lens blocking tape and the lens (tensile shear bond strength). When the substrate can be securely held in place by adhesion between the adhesive tape and the substrate to a degree that enables it to be precisely machined, the chucking characteristics are said to be good.

### EXAMPLES

Synthesis Examples, Examples and Comparative Examples of the invention are given below by way of illustration, although the invention is not limited by these Examples. The number of recurrences for each of fluorooxyalkylene units in the fluorooxyalkylene group-containing polymer residue is a number-average value computed from the ¹⁹F-NMR spectrum. In the formula below, each of recurring units shown in parentheses with p1 and q1, p2 and q2, and p3 and q3 is randomly bonded. Also, the film thickness is a value measured by a spectral ellipsometry using a spectral ellipsometer.

### [Synthesis Example 1]

The following were mixed together in a reactor and aged 24 hours at 80°C:
100 g (1.55×10⁻² mol) of the compound of the formula (A) below: 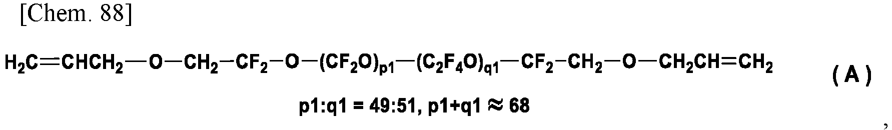
100 g of 1,3-bis(trifluoromethyl)benzene, 13.6 g (4.64×10⁻² mol) of the organosilicon compound of the formula (B) below: 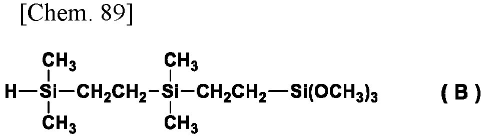
and 5.92×10⁻² g (containing 1.83×10⁻⁷ mol of Pt) of a toluene solution of a chloroplatinic acid/vinyl siloxane complex.

The solvent and unreacted substances were subsequently removed under reduced pressure, followed by washing, giving 103 g of a liquid product.

The resulting compound was confirmed by ¹H-NMR analysis to have the structure represented by the formula (C) below.

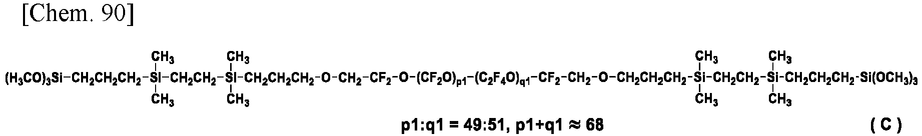

### [Synthesis Example 2]

The following were mixed together in a reactor and aged 24 hours at 80°C:
100 g (1.55×10⁻² mol) of the compound of the formula (A) below: 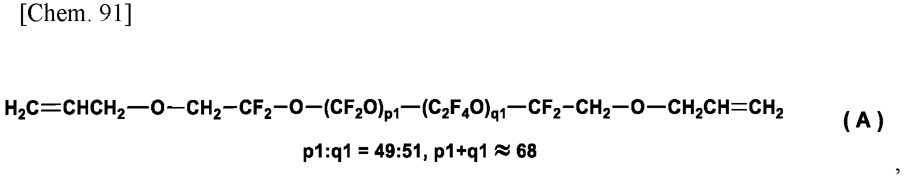
100 g of 1,3-bis(trifluoromethyl)benzene, 15.9 g (4.64×10⁻² mol) of the organosilicon compound of the formula (D) below: 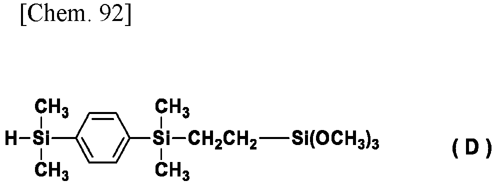
and 5.92×10⁻² g (containing 1.83×10⁻⁷ mol of Pt) of a toluene solution of a chloroplatinic acid/vinyl siloxane complex.

The solvent and unreacted substances were subsequently removed under reduced pressure, followed by washing, giving 104 g of a liquid product.

The resulting compound was confirmed by ¹H-NMR analysis to have the structure represented by formula (E) below.

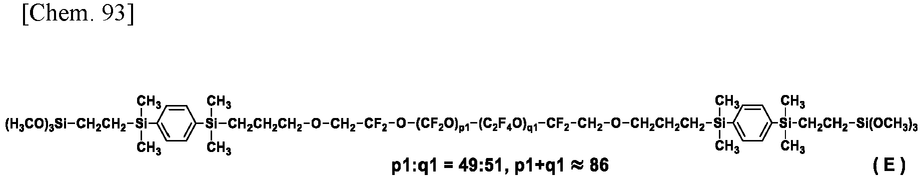

### [Synthesis Example 3]

The following were mixed together in a reactor and aged 24 hours at 80°C:
50 g (6.15×10⁻³ mol) of the compound of the formula (F) below: 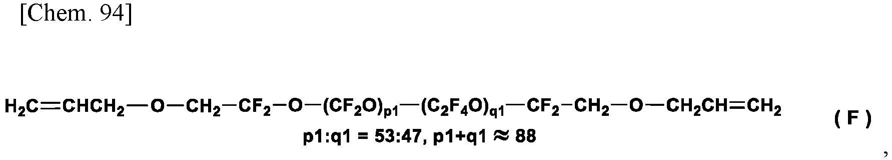
50 g of 1,3-bis(trifluoromethyl)benzene, 6.98 g (1.84×10⁻² mol) of the organosilicon compound of the formula (G) below: 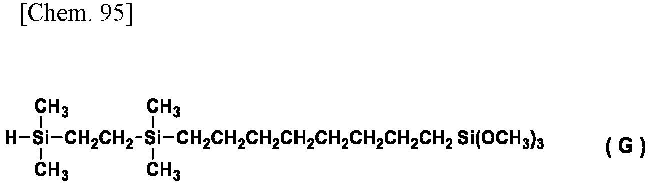
and 2.35×10⁻² g (containing 7.26×10⁻⁸ mol of Pt) of a toluene solution of a chloroplatinic acid/vinyl siloxane complex.

The solvent and unreacted substances were subsequently removed under reduced pressure, followed by washing, giving 50.1 g of a liquid product.

The resulting compound was confirmed by ¹H-NMR analysis to have the structure represented by formula (H) below.

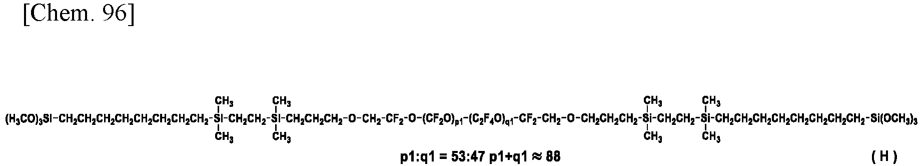

### [Synthesis Example 4]

The following were mixed together in a reactor and aged 24 hours at 80°C:
50 g (3.61×10⁻³ mol) of the compound of the formula (I) below: 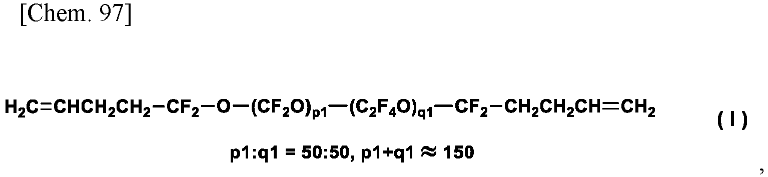
50 g of 1,3-bis(trifluoromethyl)benzene, 3.19 g (1.08×10⁻² mol) of the organosilicon compound of the formula (J) below: 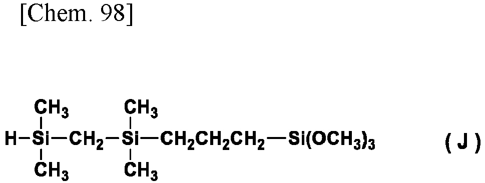
and 1.21×10⁻² g (containing 3.73×10⁻⁸ mol of Pt) of a toluene solution of a chloroplatinic acid/vinyl siloxane complex.

The solvent and unreacted substances were subsequently removed under reduced pressure, followed by washing, giving 50.6 g of a liquid product.

The resulting compound was confirmed by ¹H-NMR analysis to have the structure represented by formula (K) below.

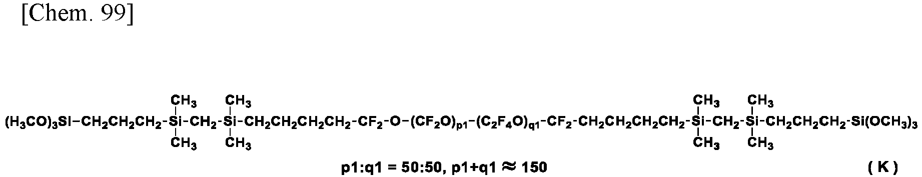

### [Synthesis Example 5]

The following were mixed together in a reactor and aged 24 hours at 80°C:
100 g (1.10×10⁻² mol) of the compound of the formula (L) below: 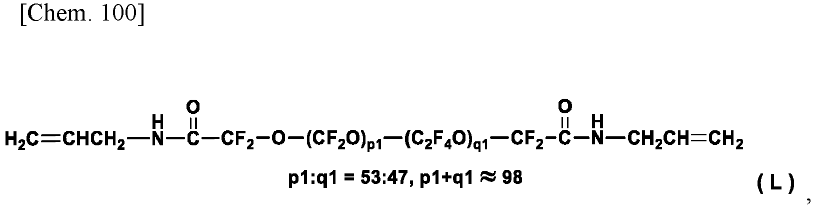
100 g of 1,3-bis(trifluoromethyl)benzene, 10.2 g (3.31×10⁻² mol) of the organosilicon compound of the formula (M) below: 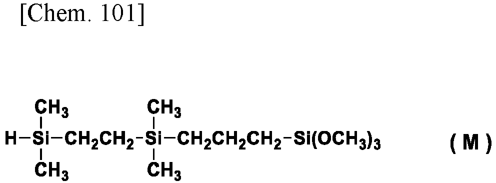
and 4.20×10⁻² g (containing 1.30×10⁻⁷ mol of Pt) of a toluene solution of a chloroplatinic acid/vinyl siloxane complex.

The solvent and unreacted substances were subsequently removed under reduced pressure, followed by washing, giving 105 g of a liquid product.

The resulting compound was confirmed by ¹H-NMR analysis to have the structure represented by formula (O) below.

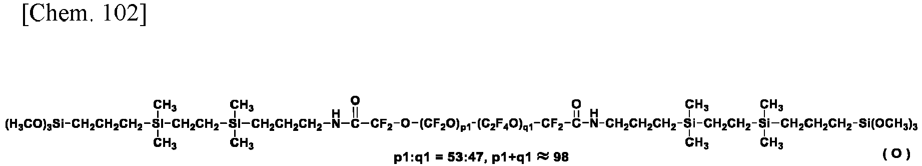

### [Synthesis Example 6]

The following were mixed together in a reactor and aged 24 hours at 80°C:
100 g (5.94×10⁻³ mol) of the compound of the formula (P) below: 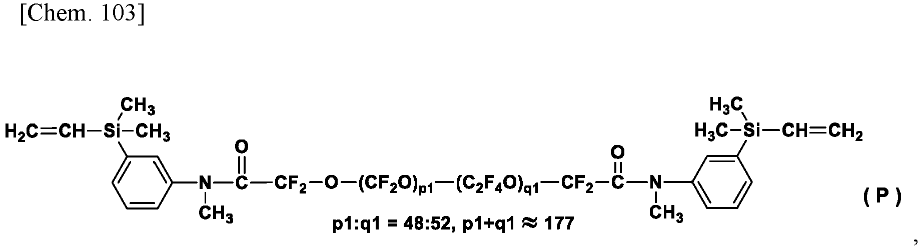
100 g of 1,3-bis(trifluoromethyl)benzene, 7.56 g (1.78×10⁻² mol) of the organosilicon compound of the formula (Q) below: 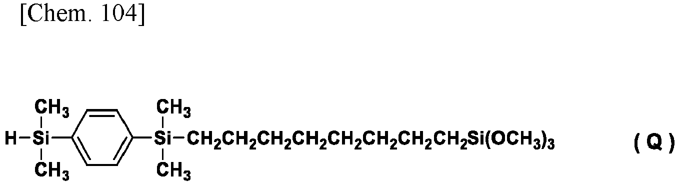
and 2.27×10⁻² g (containing 7.01×10⁻⁸ mol of Pt) of a toluene solution of a chloroplatinic acid/vinyl siloxane complex.

The solvent and unreacted substances were subsequently removed under reduced pressure, followed by washing, giving 104 g of a liquid product.

The resulting compound was confirmed by ¹H-NMR analysis to have the structure represented by formula (R) below.

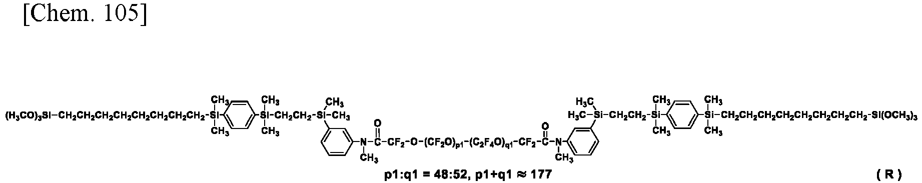

### [Synthesis Example 7]

The following were mixed together in a reactor and aged 24 hours at 80°C:
50 g (6.38×10⁻³ mol) of the compound of the formula (V) below: 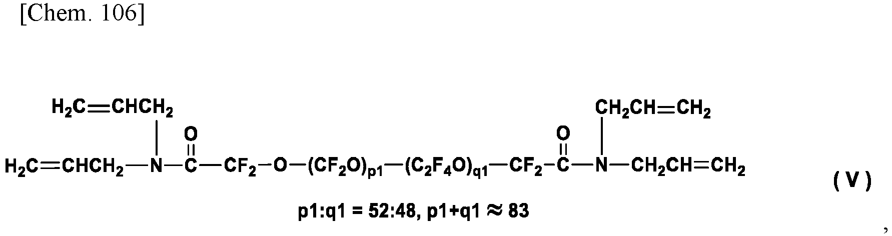
50 g of 1,3-bis(trifluoromethyl)benzene, 11.8 g (3.83×10⁻² mol) of the organosilicon compound of the formula (M) below: 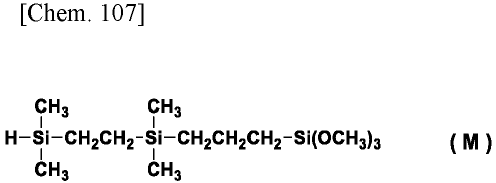
and 2.44×10⁻² g (containing 7.53×10⁻⁸ mol of Pt) of a toluene solution of a chloroplatinic acid/vinyl siloxane complex.

The solvent and unreacted substances were subsequently removed under reduced pressure, followed by washing, giving 55 g of a liquid product.

The resulting compound was confirmed by ¹H-NMR analysis to have the structure represented by formula (W) below.

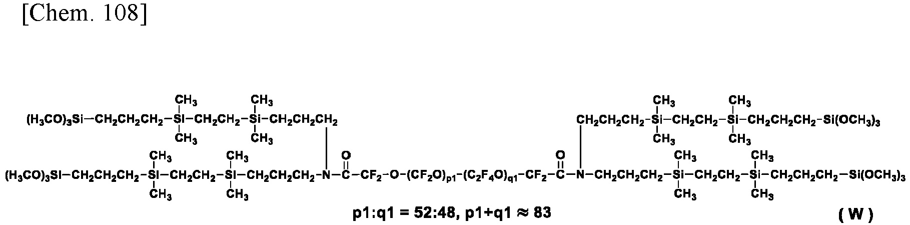

### [Synthesis Example 8]

The following were mixed together in a reactor and aged 24 hours at 80°C:
100 g (1.10×10⁻² mol) of the compound of the formula (X) below: 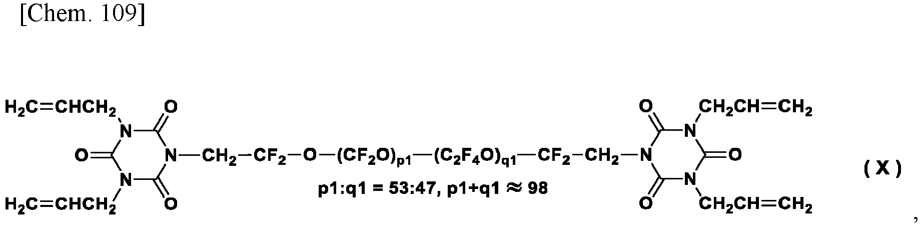
100 g of 1,3-bis(trifluoromethyl)benzene, 22.5 g (6.59×10⁻² mol) of the organosilicon compound of the formula (D) below: 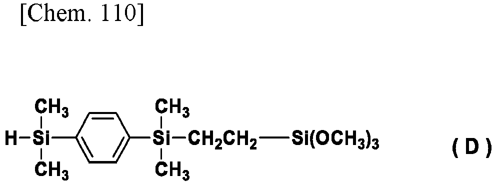
and 4.20×10⁻² g (containing 1.30×10⁻⁷ mol of Pt) of a toluene solution of a chloroplatinic acid/vinyl siloxane complex.

The solvent and unreacted substances were subsequently removed under reduced pressure, followed by washing, giving 112 g of a liquid product.

The resulting compound was confirmed by ¹H-NMR analysis to have the structure represented by formula (Y) below.

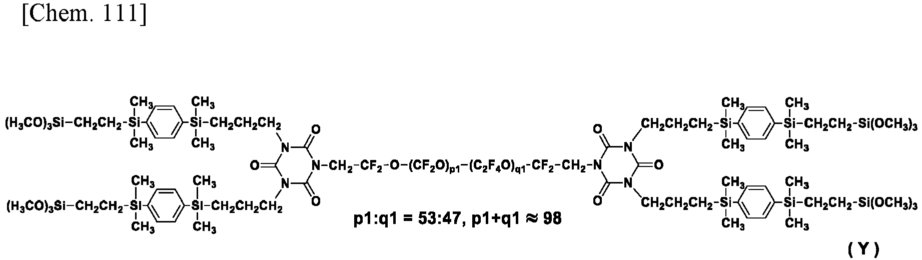

### [Synthesis Example 9]

The following were mixed together in a reactor and aged 24 hours at 80°C:
100 g (1.41×10⁻² mol) of the compound of the formula (Z) below: 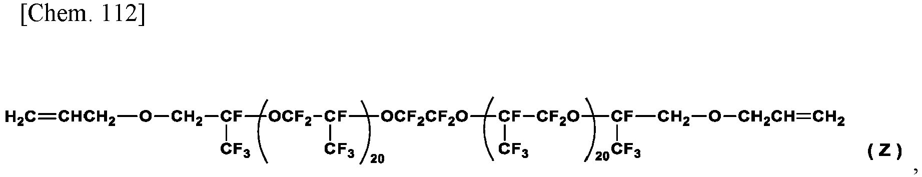
100 g of 1,3-bis(trifluoromethyl)benzene, 13.0 g (4.23×10⁻² mol) of the organosilicon compound of the formula (M) below: 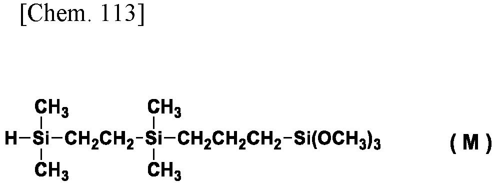
and 5.39×10⁻² g (containing 1.66×10⁻⁷ mol of Pt) of a toluene solution of a chloroplatinic acid/vinyl siloxane complex.

The solvent and unreacted substances were subsequently removed under reduced pressure, followed by washing, giving 106 g of a liquid product.

The resulting compound was confirmed by ¹H-NMR analysis to have the structure represented by formula (AA) below.

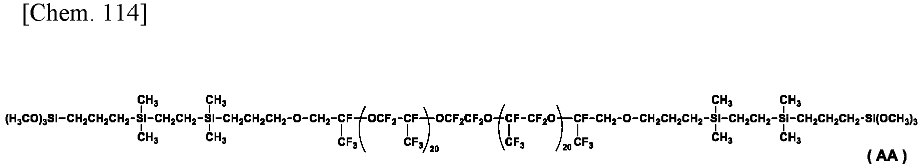

### [Synthesis Example 10]

The following were mixed together in a reactor and aged 24 hours at 80°C:
100 g (5.99×10⁻³ mol) of the compound of the formula (AB) below: 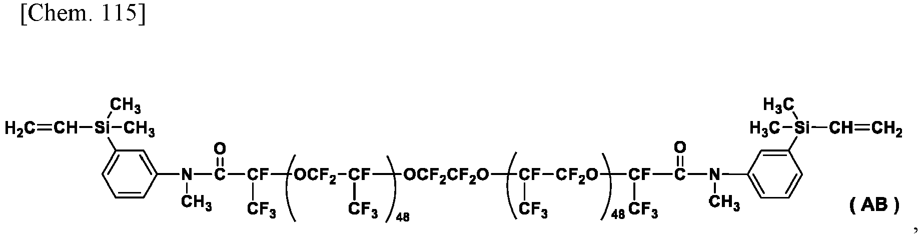
100 g of 1,3-bis(trifluoromethyl)benzene, 6.41 g (1.80×10⁻² mol) of the organosilicon compound of the formula (T) below: 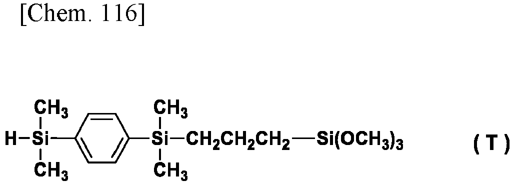
and 2.29×10⁻² g (containing 7.07×10⁻⁸ mol of Pt) of a toluene solution of a chloroplatinic acid/vinyl siloxane complex.

The solvent and unreacted substances were subsequently removed under reduced pressure, followed by washing, giving 102 g of a liquid product.

The resulting compound was confirmed by ¹H-NMR analysis to have the structure represented by formula (AC) below.

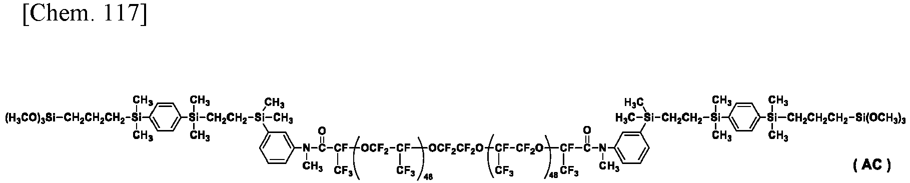

### [Synthesis Example 11]

The following were mixed together in a reactor and aged 24 hours at 80°C:
100 g (1.01×10⁻² mol) of the compound of the formula (AD) below: 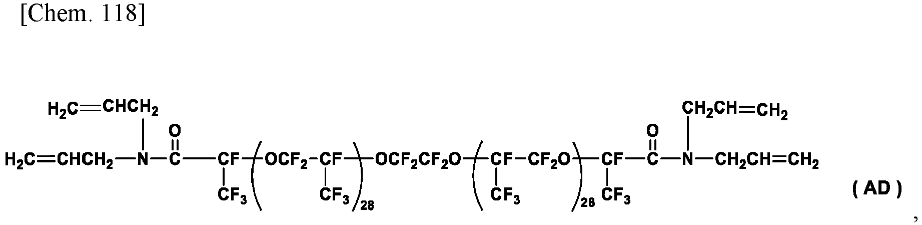
100 g of 1,3-bis(trifluoromethyl)benzene, 23.0 g (6.08×10⁻² mol) of the organosilicon compound of the formula (G) below: 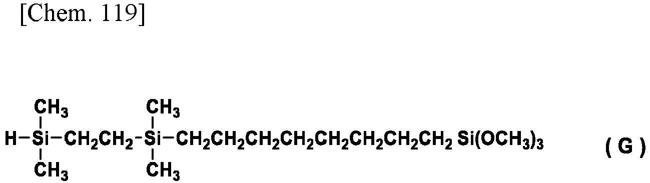
and 3.86×10⁻² g (containing 1.19×10⁻⁷ mol of Pt) of a toluene solution of a chloroplatinic acid/vinyl siloxane complex.

The solvent and unreacted substances were subsequently removed under reduced pressure, followed by washing, giving 114 g of a liquid product.

The resulting compound was confirmed by ¹H-NMR analysis to have the structure represented by formula (AE) below.

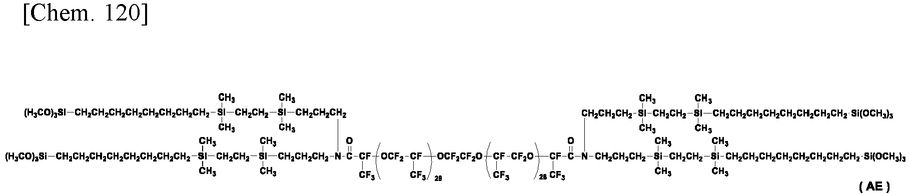

### [Synthesis Example 12]

The following were mixed together in a reactor and aged 24 hours at 80°C:
50 g (4.04×10⁻³ mol) of the compound of formula (AF) below: 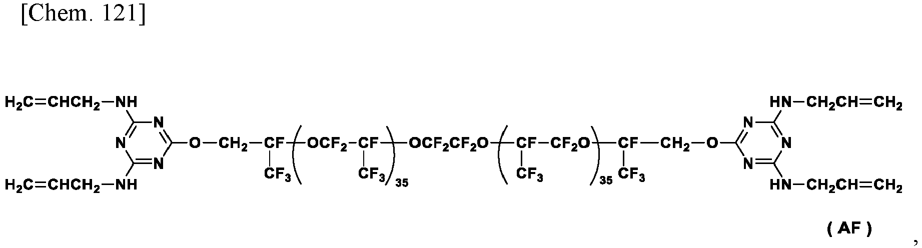
50 g of 1,3-bis(trifluoromethyl)benzene, 8.64 g (2.43×10⁻² mol) of the organosilicon compound of the formula (T) below: 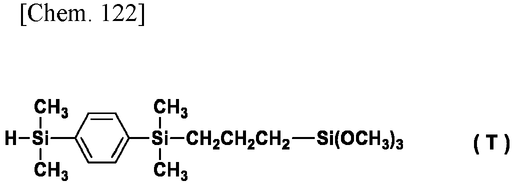
and 1.54×10⁻² g (containing 4.77×10⁻⁸ mol of Pt) of a toluene solution of a chloroplatinic acid/vinyl siloxane complex.

The solvent and unreacted substances were subsequently removed under reduced pressure, followed by washing, giving 51 g of a liquid product.

The resulting compound was confirmed by ¹H-NMR analysis to have the structure represented by formula (AG) below.

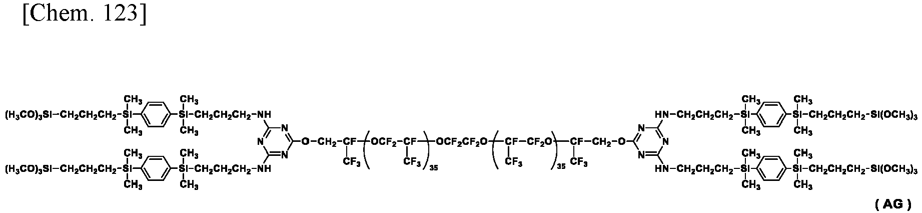

### [Synthesis Example 13]

The following were mixed together in a reactor and aged 24 hours at 80°C:
100 g (1.28×10⁻² mol) of the compound of the formula (AH) below: 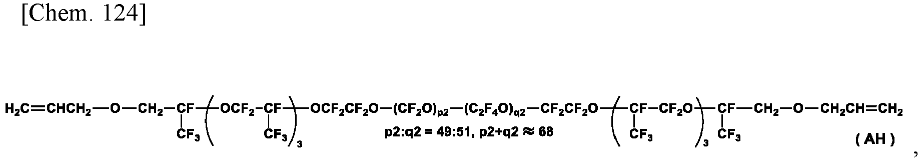
100 g of 1,3-bis(trifluoromethyl)benzene, 13.1 g (3.84×10⁻² mol) of the organosilicon compound of the formula (D) below: 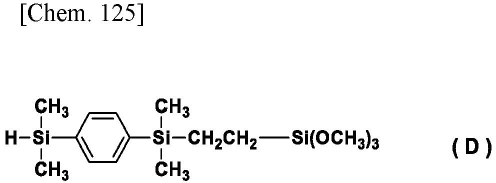
and 4.89×10⁻² g (containing 1.51×10⁻⁷ mol of Pt) of a toluene solution of a chloroplatinic acid/vinyl siloxane complex.

The solvent and unreacted substances were subsequently removed under reduced pressure, followed by washing, giving 102 g of a liquid product.

The resulting compound was confirmed by ¹H-NMR analysis to have the structure represented by formula (AI) below.

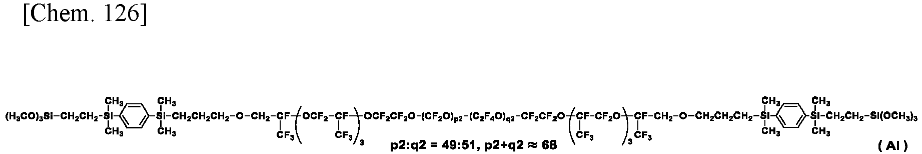

### [Synthesis Example 14]

The following were mixed together in a reactor and aged 24 hours at 80°C:
100 g (1.42×10⁻² mol) of the compound of the formula (AJ) below: 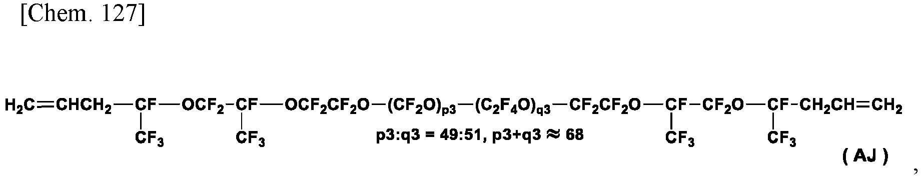
100 g of 1,3-bis(trifluoromethyl)benzene, 11.9 g (4.25×10⁻² mol) of the organosilicon compound of the formula (AK) below: 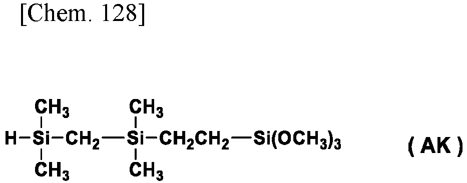
and 5.42×10⁻² g (containing 1.68×10⁻⁷ mol of Pt) of a toluene solution of a chloroplatinic acid/vinyl siloxane complex.

The solvent and unreacted substances were subsequently removed under reduced pressure, followed by washing, giving 105 g of a liquid product.

The resulting compound was confirmed by ¹H-NMR analysis to have the structure represented by formula (AL) below.

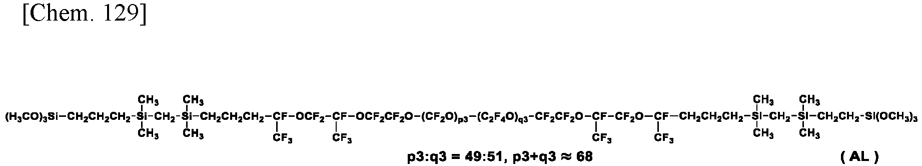

### [Synthesis Example 15]

The following were mixed together in a reactor and aged 24 hours at 80°C:
70 g (7.14×10⁻³ mol) of the compound of the formula (AO) below: 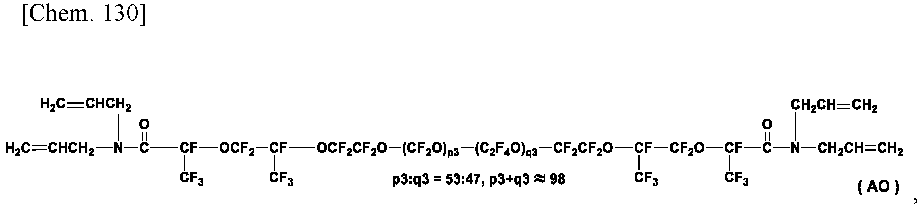
70 g of 1,3-bis(trifluoromethyl)benzene, 15.2 g (4.28×10⁻² mol) of the organosilicon compound of the formula (T) below: 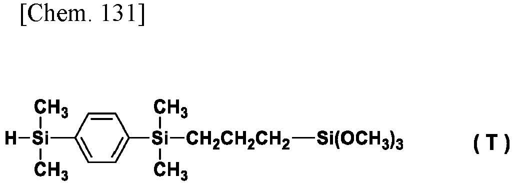
and 2.73×10⁻² g (containing 8.43×10⁻⁸ mol of Pt) of a toluene solution of a chloroplatinic acid/vinyl siloxane complex.

The solvent and unreacted substances were subsequently removed under reduced pressure, followed by washing, giving 78 g of a liquid product.

The resulting compound was confirmed by ¹H-NMR analysis to have the structure represented by formula (AP) below.

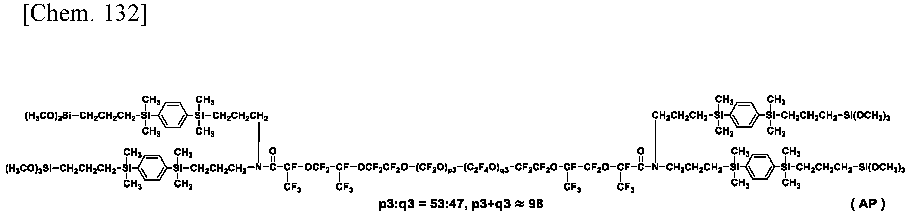

### [Synthesis Example 16]

The following were mixed together in a reactor and aged 24 hours at 80°C:
100 g (1.23×10⁻² mol) of the compound of the formula (AQ) below: 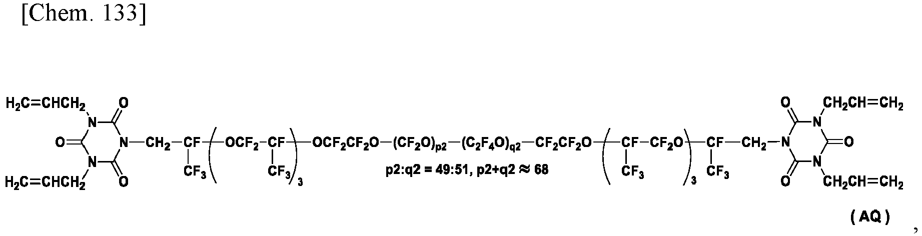
100 g of 1,3-bis(trifluoromethyl)benzene, 22.8 g (7.40×10⁻² mol) of the organosilicon compound of the formula (M) below: 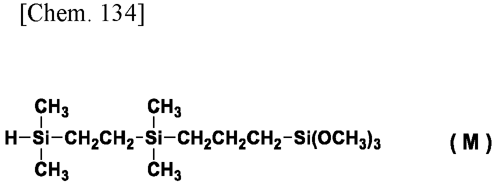
and 4.70×10⁻² g (containing 1.45×10⁻⁷ mol of Pt) of a toluene solution of a chloroplatinic acid/vinyl siloxane complex.

The solvent and unreacted substances were subsequently removed under reduced pressure, followed by washing, giving 111 g of a liquid product.

The resulting compound was confirmed by ¹H-NMR analysis to have the structure represented by formula (AS) below.

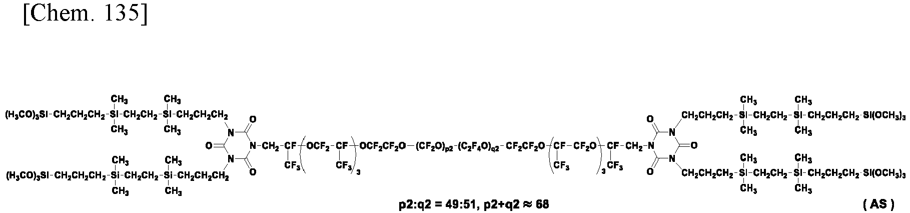

### [Example 1]

A surface treatment agent was prepared by dissolving the compound obtained in Synthesis Example 1 in Novec 7200 (ethyl perfluorobutyl ether, manufactured by 3M Co.) to a concentration of 20 wt%.

### [Example 2]

A surface treatment agent was prepared by dissolving the compound obtained in Synthesis Example 2 in Novec 7200 (ethyl perfluorobutyl ether, manufactured by 3M Co.) to a concentration of 20 wt%.

### [Example 3]

A surface treatment agent was prepared by dissolving the compound obtained in Synthesis Example 3 in Opteon SF10 (methyl perfluoroheptenyl ether, manufactured by Chemours-Mitsui Fluoroproducts Co., Ltd.) to a concentration of 20 wt%.

### [Example 4]

A surface treatment agent was prepared by dissolving the compound obtained in Synthesis Example 4 in Asahiklin AC-6000 (tridecafluorooctane, manufactured by AGC Inc.) to a concentration of 20 wt%.

### [Example 5]

A surface treatment agent was prepared by dissolving the compound obtained in Synthesis Example 6 in Asahiklin AC-6000 (tridecafluorooctane, manufactured by AGC Inc.) to a concentration of 20 wt%.

### [Example 6]

A surface treatment agent was prepared by dissolving the compound obtained in Synthesis Example 7 in Novec 7200 (ethyl perfluorobutyl ether, manufactured by 3M Co.) to a concentration of 20 wt%.

### [Example 7]

A surface treatment agent was prepared by dissolving the compound obtained in Synthesis Example 8 in Novec 7200 (ethyl perfluorobutyl ether, manufactured by 3M Co.) to a concentration of 20 wt%.

### [Example 8]

A surface treatment agent was prepared by dissolving the compound obtained in Synthesis Example 10 in Opteon SF10 (methyl perfluoroheptenyl ether, manufactured by Chemours-Mitsui Fluoroproducts Co., Ltd.) to a concentration of 20 wt%.

### [Example 9]

A surface treatment agent was prepared by dissolving the compound obtained in Synthesis Example 11 in Opteon SF10 (methyl perfluoroheptenyl ether, manufactured by Chemours-Mitsui Fluoroproducts Co., Ltd.) to a concentration of 20 wt%.

### [Example 10]

A surface treatment agent was prepared by dissolving the compound obtained in Synthesis Example 13 in Novec 7200 (ethyl perfluorobutyl ether, manufactured by 3M Co.) to a concentration of 20 wt%.

### [Example 11]

A surface treatment agent was prepared by dissolving the compound obtained in Synthesis Example 14 in Novec 7200 (ethyl perfluorobutyl ether, manufactured by 3M Co.) to a concentration of 20 wt%.

### [Example 12]

A surface treatment agent was prepared by dissolving the compound obtained in Synthesis Example 15 in Novec 7300 (methyl perfluorohexyl ether, manufactured by 3M Co.) to a concentration of 20 wt%.

### [Example 13]

A surface treatment agent was prepared by dissolving the compound obtained in Synthesis Example 16 in Novec 7200 (ethyl perfluorobutyl ether, manufactured by 3M Co.) to a concentration of 20 wt%.

### [Comparative Example 1]

A surface treatment agent was prepared by dissolving the compound of the formula (AT) below: 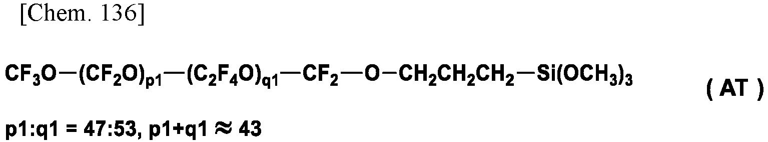 in Novec 7200 (ethyl perfluorobutyl ether, manufactured by 3M Co.) to a concentration of 20 wt%.

### [Comparative Example 2]

A surface treatment agent was prepared by dissolving the compound of the formula (AU) below: 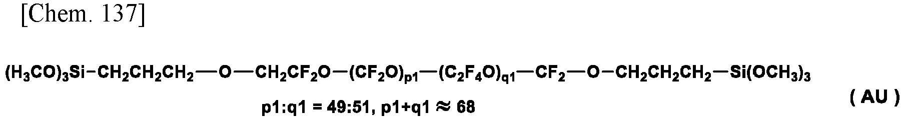 in Novec 7200 (ethyl perfluorobutyl ether, manufactured by 3M Co.) to a concentration of 20 wt%.

### [Comparative Example 3]

A surface treatment agent was prepared by dissolving the compound of the formula (AV) below:

**C₆F₁₃-Si(OCH₃)₃** **(AV)**

in Novec 7200 (ethyl perfluorobutyl ether, manufactured by 3M Co.) to a concentration of 20 wt%.

### Preparation of Surface Treatment Agents and Formation of Cured Films

The surface treatment agents were prepared as in the above Examples. Each surface treatment agent was vacuum deposited (treatment condition: pressure, 2.0×10⁻² Pa; heating temperature, 700°C) onto an anti-reflective (AR)-treated plastic lens (size: 80 mm diameter) having on the outermost surface a SiO₂ layer and cured for 12 hours in a 25°C, 50% humidity environment, thereby forming a 10 nm thick cured film.

### Evaluation of Water and Oil Repellency

### [Measurement of Initial Water Repellency]

For the lenses having formed thereon a cured film produced as described above, the contact angle of the cured film to water (water repellency) was measured using a Drop Master contact angle meter (Kyowa Interface Science Co., Ltd.) (liquid droplet, 2 µL; temperature, 25°C; humidity, 40%). The results (initial water contact angle) are shown in Table 1.

Initially, both the Examples and Comparative Examples showed good water repellency.

### Evaluation of Slip Properties

### [Measurement of Dynamic Coefficient of Friction]

For the lenses having formed thereon a cured film produced as described above, the dynamic coefficient of friction against a Bemcot wipe (Asahi Kasei Corporation) was measured using the 14 FW surface property tester (Shinto Scientific Co., Ltd.) under the following condition. The results are shown in Table 1.

| | |
|---|---|
| Surface area of contact: | 10 mm × 30 mm |
| Load: | 100 g |

### Evaluation of Abrasion Resistance

For the lenses having formed thereon a cured film produced as described above, the contact angle of the cured film to water (water repellency) following abrasion under the following condition using a rubbing tester (Shinto Scientific Co., Ltd.) was measured in the same way as described above and the result was treated as the abrasion resistance evaluation. The testing environment condition was 25°C and 40% humidity. In addition, the percent decrease from the initial water contact angle was calculated; these results (water contact angle following cloth abrasion, percent decrease in water contact angle) are shown in Table 1.

### [Measurement of Cloth Abrasion Resistance]

| | |
|---|---|
| Cloth: | Bemcot (Asahi Kasei Corp.) |
| Surface area of contact: | 1 cm² |
| Distance of travel (one way): | 40 mm |
| Rate of travel: | 4,800 mm/min |
| Load: | 1 kg/1 cm² |
| Number of rubbing cycles: | 30,000 |

### Evaluation of Chucking Characteristics

Lens blocking tape (LEAP III 1695M, manufactured by 3M Co.) was attached to the lenses having formed thereon a cured film produced as described above, and the tensile shear bond strength was measured. This entailed pulling the lens on which the cured film was formed and the lens blocking tape attached to the lens so that a shear stress acts upon the bonded surface therebetween, and measuring the maximum strength when the adhesive joint breaks. The results (tensile shear bond strengths) are shown in Table 1.

### [Measurement of Tensile Shear Bond Strength]

| | |
|---|---|
| Bonded surface area: | 2.7 cm² |
| Pulling rate: | 50 mm/min |

In Examples 1 to 13, by using a compound having a high molecular weight and a silalkylene structure or silarylene structure within linkages (fluoropolyether group-containing polymer of the invention), the substrate adhesion improved, giving results that indicated a high cloth abrasion durability. Also, by having functional groups at both ends, the tensile shear bond strength was high and high chucking characteristics were confirmed. In Comparative Example 1, the dynamic coefficient of friction was low and the chucking characteristics were also low. In Comparative Example 2, the chucking characteristics were high but the cloth abrasion durability was low. Comparative Example 3 also yielded results indicating a low cloth abrasion resistance. As demonstrated above, in the Examples in which the fluoropolyether group-containing polymer of the invention was used, it was possible to achieve both a high level of cloth abrasion durability and also excellent chucking characteristics.

**[Table 1]**

| | Initial water contact angle (°) | Water contact angle after cloth abrasion (°) | Percent decrease in water contact angle (%) | Dynamic coefficient of friction | Tensile shear bond strength (N) |
|---|---|---|---|---|---|
| Example 1 | 110 | 107 | 2.7 | 0.10 | 46 |
| Example 2 | 108 | 104 | 3.7 | 0.11 | 44 |
| Example 3 | 108 | 105 | 2.8 | 0.09 | 46 |
| Example 4 | 112 | 110 | 1.8 | 0.08 | 41 |
| Example 5 | 111 | 106 | 4.5 | 0.08 | 43 |
| Example 6 | 110 | 109 | 0.9 | 0.12 | 47 |
| Example 7 | 109 | 108 | 0.9 | 0.13 | 49 |
| Example 8 | 110 | 104 | 5.5 | 0.24 | 53 |
| Example 9 | 107 | 102 | 4.8 | 0.22 | 56 |
| Example 10 | 111 | 107 | 3.6 | 0.10 | 44 |
| Example 11 | 112 | 110 | 1.8 | 0.09 | 40 |
| Example 12 | 109 | 103 | 5.5 | 0.10 | 42 |
| Example 13 | 108 | 104 | 3.7 | 0.12 | 45 |
| Comparative Example 1 | 116 | 104 | 10.3 | 0.03 | 18 |
| Comparative Example 2 | 107 | 93 | 13.1 | 0.08 | 36 |
| Comparative Example 3 | 105 | 68 | 35.2 | 0.30 | 58 |

## Claims

1. A fluoropolyether group-containing polymer having silanol groups or hydrolyzable silyl groups, and having the general formula (1) below: 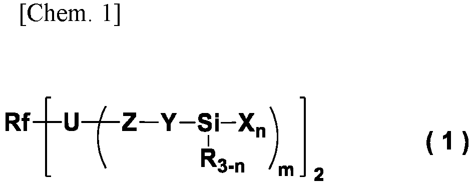 wherein
Rf is a divalent fluorooxyalkylene group-containing polymer residue of the general formula (2) below: 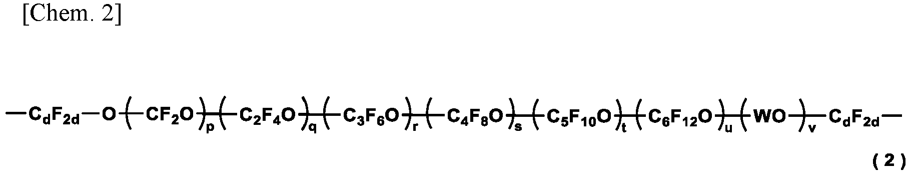
wherein W is a fluoroalkylene group having one or more hydrogen atoms, d is independently an integer of 1 to 3 per unit, each of p, q, r, s, t, u and v is an integer of 0 to 450, p+q+r+s+t+u+v = 20 to 450, and each of these units may be linear or branched, each of recurring units shown in parentheses with p, q, r, s, t, u and v may be randomly bonded, and a number-average molecular weight of the polymer residue is 6,000 to 30,000,
U is independently a divalent or trivalent organic group,
Z is independently a silalkylene structure or a silarylene structure,
Y is independently a divalent organic group,
R is independently an alkyl group having 1 to 4 carbon atoms or a phenyl group,
X is independently a hydroxyl group or a hydrolyzable group,
n is independently an integer of 1 to 3 per bonding silicon atom, and
m is 1 or 2.

2. The fluoropolyether group-containing polymer of claim 1 wherein, in the formula (1), U is a divalent or trivalent aliphatic saturated hydrocarbon group having 1 to 20 carbon atoms which may include one, two or more atoms or groups selected from the group consisting of arylene group having 6 to 8 carbon atoms, oxygen atom, sulfur atom, hydroxyl group, diorganosilylene group, secondary amino group, tertiary amino group, carbonyl group, amide group, ester group, isocyanuric group and triazine ring-containing group.

3. The fluoropolyether group-containing polymer of claim 1 or 2 wherein, in the formula (1), Y is an alkylene group having 1 to 20 carbon atoms which may include one, two or more atoms or groups selected from the group consisting of oxygen atom, sulfur atom and arylene group having 6 to 8 carbon atoms.

4. The fluoropolyether group-containing polymer of any one of claims 1 to 3 wherein, in the formula (1), X is selected from the group consisting of hydroxyl group, alkoxy group having 1 to 10 carbon atoms, alkoxyalkoxy group having 2 to 10 carbon atoms, acyloxy group having 2 to 10 carbon atoms, alkenyloxy group having 2 to 10 carbon atoms and halogen atom.

5. The fluoropolyether group-containing polymer of any one of claims 1 to 4, wherein the polymer of the formula (1) is represented by any of the formulae below: 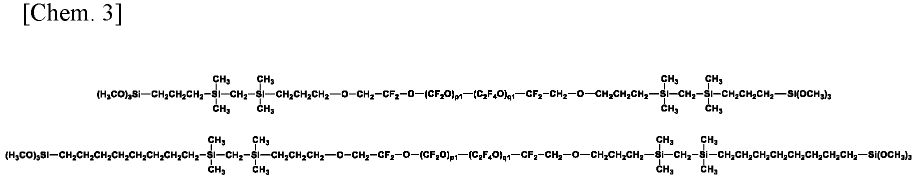 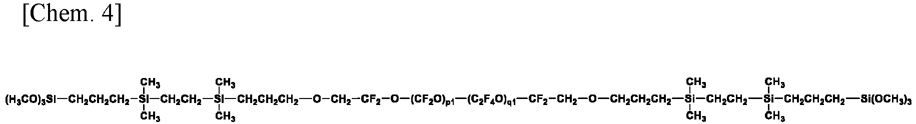 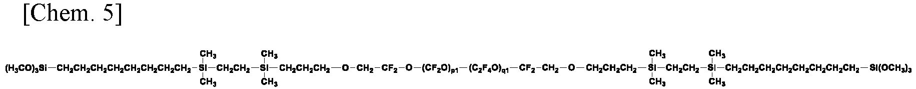 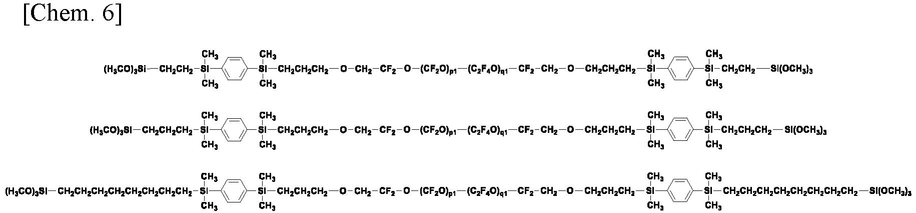 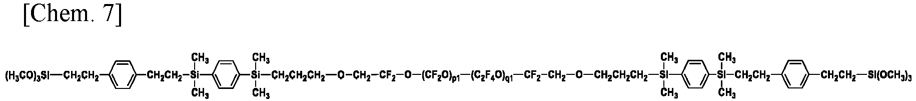 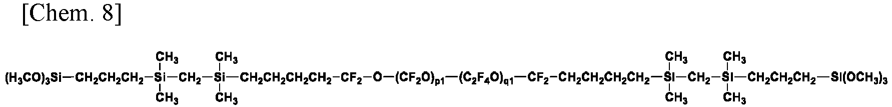 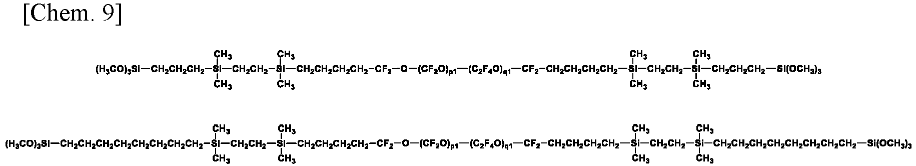 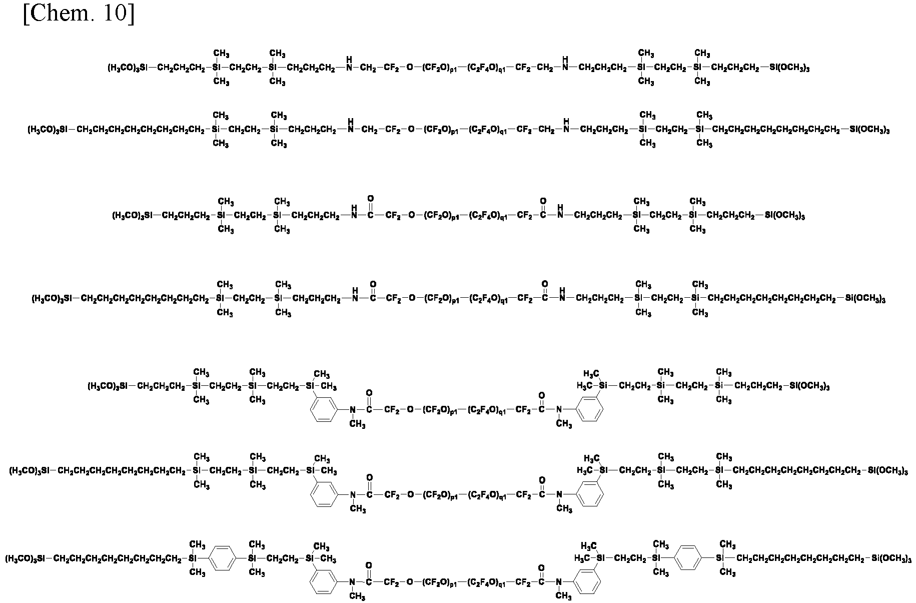 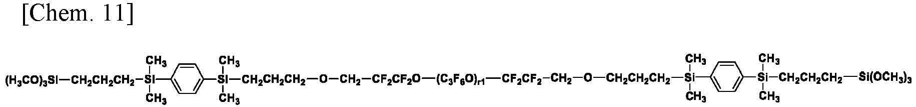 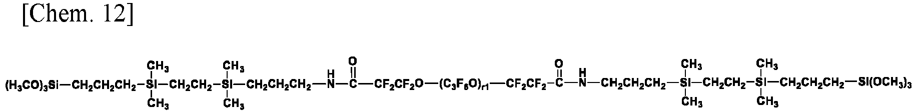 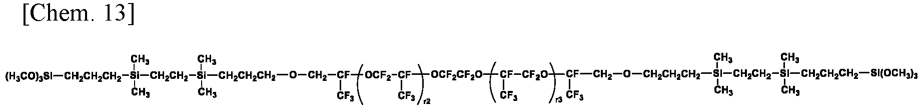 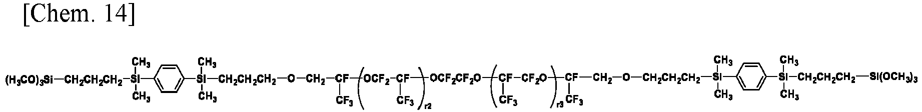 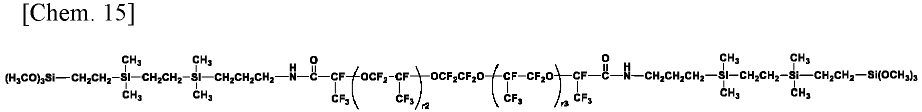 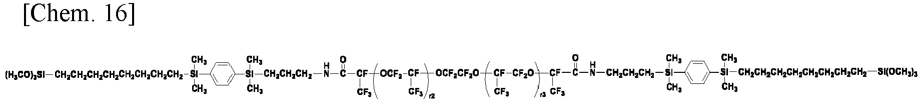 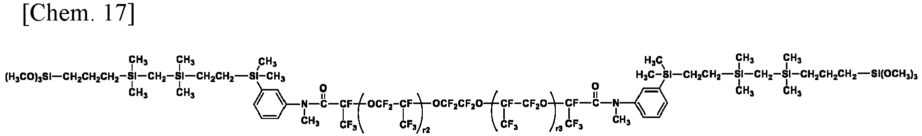 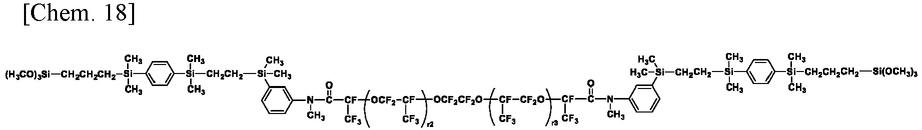 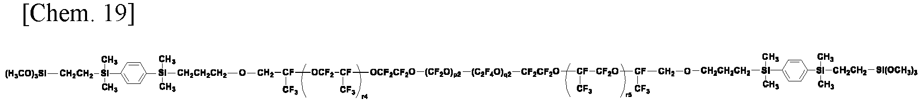 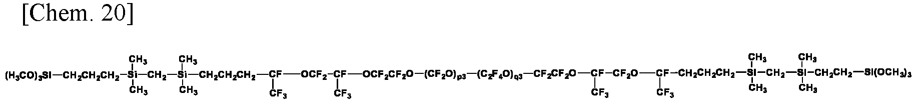 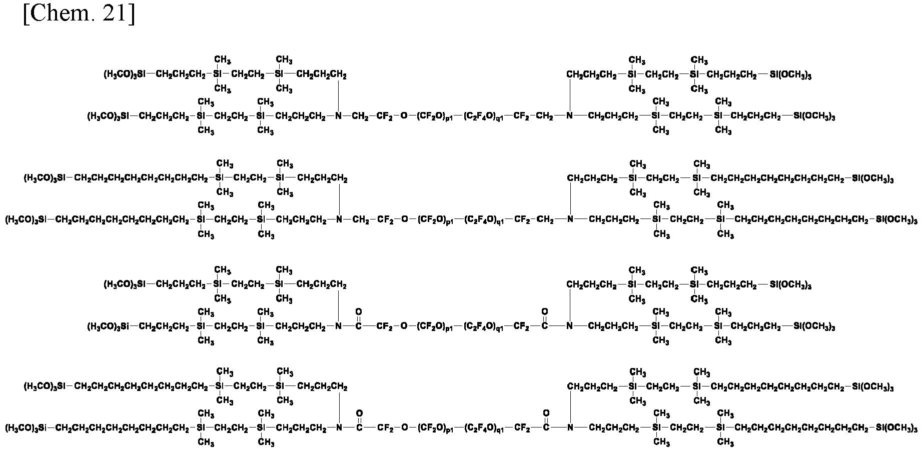 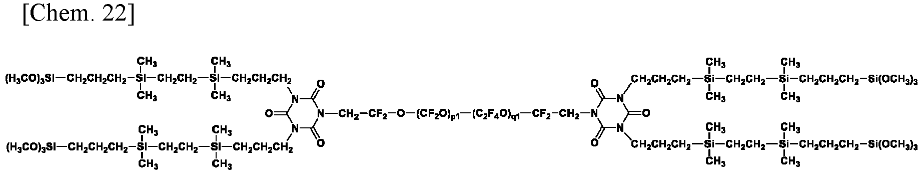 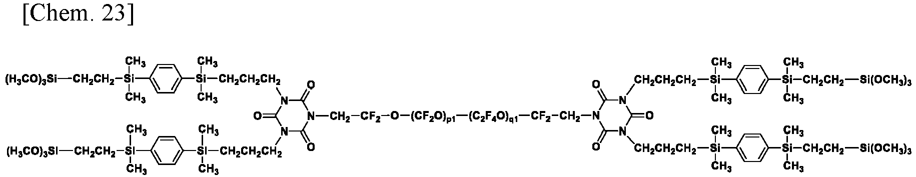 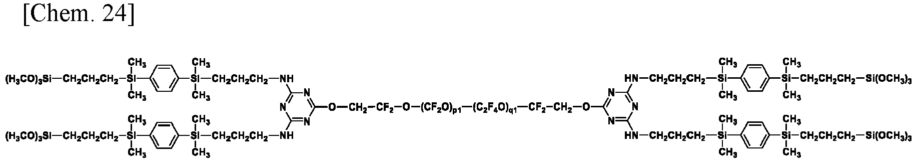 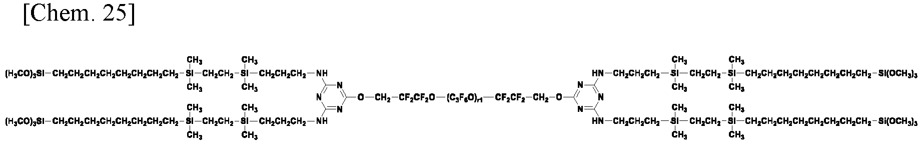 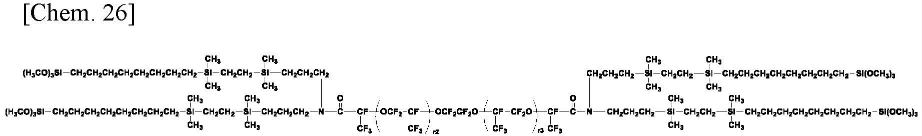 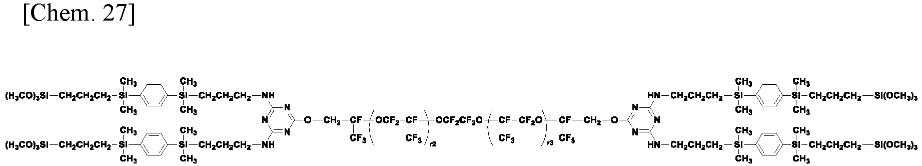 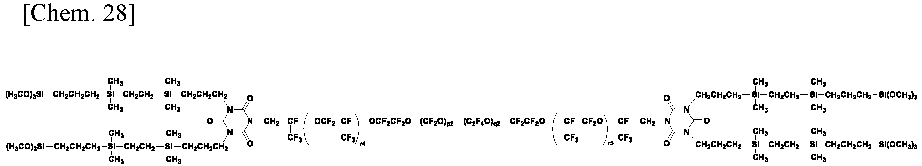 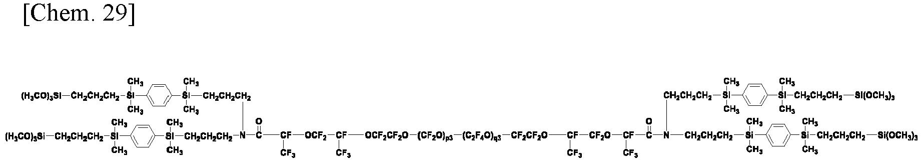 wherein p1 is an integer of 5 to 440, q1 is an integer of 5 to 250, and p1+q1 is an integer of 50 to 450; r1 is an integer of 35 to 180, r2 is an integer of 1 to 100, r3 is an integer of 1 to 100, and r2+r3 is an integer of 35 to 180; p2 is an integer of 1 to 400, q2 is an integer of 1 to 250, r4 is an integer of 1 to 100, r5 is an integer of 1 to 100, and p2+q2+r4+r5 is an integer of 40 to 403; p3 is an integer of 5 to 440, q3 is an integer of 5 to 250, and p3+q3 is an integer of 50 to 445; and the recurring units shown in parentheses with p1 and q1, p2 and q2, and p3 and q3 may be randomly bonded.

6. A surface treatment agent composed primarily of the fluoropolyether group-containing polymer of any one of claims 1 to 5 and/or a partial (hydrolytic) condensation product thereof.

7. An article surface-treated with the surface treatment agent of claim 6.

8. The article of claim 7 which is a lens substrate.
